# EUROPEAN PATENT APPLICATION

(11) **EP 4 576 940 A1**
(43) Date of publication of application: **25.06.2025**
(21) Application number: 23862048.8
(22) Date of filing: 14.07.2023
(51) Int. Cl.: H05B 45/10, H05B 47/165

(54) **METHOD AND APPARATUS FOR CONTROLLING LIGHT DISPLAY**

(30) Priority: 05.09.2022 CN 202211080757
(71) Applicant: Shenzhen Yinwang Intelligent Technologies Co., Ltd., Shenzhen, Guangdong 518129 (CN)
(72) Inventor: LI, Huayu, Shenzhen, Guangdong 518129 (CN); ZHOU, Jin, Shenzhen, Guangdong 518129 (CN)
(74) Representative: MERH-IP Matias Erny Reichl Hoffmann Patentanwälte PartG mbB
(86) International application number: PCT/CN2023/107419
(87) International publication number: WO 2024/051347

(57) **Abstract**

This application provides a method and an apparatus for controlling light display. The method includes: obtaining to-be-played audio data; determining an audio attribute of the audio data, where the audio attribute includes at least one of a beat feature, a speed feature, and a tune feature of the audio data; and controlling, based on the audio attribute, a change in light effect displayed by a light display device. The method in this application may be applied to an intelligent vehicle and an electric vehicle, to help improve driving experience of a user in terms of light interaction.

## Description

This application claims priority to Chinese Patent Application No. 202211080757.7, filed with the China National Intellectual Property Administration on September 5, 2022 and entitled "METHOD AND APPARATUS FOR CONTROLLING LIGHT DISPLAY", which is incorporated herein by reference in its entirety.

### TECHNICAL FIELD

This application relates to the field of light control, and more specifically, to a method and an apparatus for controlling light display.

### BACKGROUND

With continuous development of the automotive industry, people have an increasingly high requirement on a personalized and healthy environment in an automobile. As an important part of styling and an overall appearance of an automobile, a breathing light and an ambient light in the automobile are used by more automobile manufacturers. A combination of music and light effect inside a cabin to make the light effect change with the music is a favorite function for a user, providing immersive music experience for driving. However, current light effect in the automobile has poor expressiveness in changing with the music, and cannot meet diverse requirements of users.

Therefore, a solution for controlling light display that can improve user experience needs to be urgently developed.

### SUMMARY

This application provides a method and an apparatus for controlling light display, to help improve driving experience of a user in terms of light interaction.

The method provided in this application may be applied to a mobile carrier. The mobile carrier may include a road transportation means, a watercraft, an aircraft, an industrial device, an agricultural device, an entertainment device, or the like. For example, the mobile carrier may be a vehicle. The vehicle is a vehicle in a broad sense, and may be a transportation means (for example, a commercial automobile, a passenger vehicle, a truck, a motorcycle, an airplane flying vehicle, a train, or a ship), an industrial vehicle (for example, an excavator, a bulldozer, or a crane), an engineering vehicle (for example, an excavator, a bulldozer, or a crane), an agricultural device (for example, a lawn mower, a harvester), a recreation device, a toy vehicle, or the like. A type of the vehicle is not specifically limited in embodiments of this application. For another example, the mobile carrier may be a transportation means, for example, an airplane or a ship.

According to a first aspect, a method for controlling light display is provided. The method includes: obtaining to-be-played audio data; determining an audio attribute of the audio data, where the audio attribute includes at least one of a beat feature, a speed feature, and a tune feature of the audio data; and controlling, based on the audio attribute, a change in light effect displayed by a light display device.

In the foregoing technical solution, the light effect can be designed based on audio features in one or more dimensions. This helps improve a degree of cooperation between the light effect and music, improve expressiveness of the light effect in the music, and further improve driving experience of a user.

For example, the light effect includes at least one of the following: a light color, light luminance, and dynamic effect formed by light. When the light display device includes a light strip, the dynamic effect formed by the light includes but is not limited to: a direction in which light changes, a speed at which the light changes, a flow length of the light, and a color change type (for example, a change based on a color palette, or a black and white change) in the light strip.

For example, the audio data may be obtained from music playing software, or may be obtained in another manner. This is not specifically limited in this embodiment of this application.

For example, the determining an audio attribute of the audio data may be: determining the audio attribute by processing the audio data by using a music identification algorithm. For example, the music identification algorithm may include a note onset detection algorithm, a music tempo detection algorithm, a music melody identification algorithm, an algorithm based on a pitch class profile, an algorithm based on constant Q transform, and the like. Alternatively, the audio attribute of the audio data may be directly obtained from a data source of the audio data. For example, the data source has an audio attribute related tag, and the audio attribute of the audio data may be directly determined based on the tag.

For example, when the method is applied to a vehicle, the light display device may be disposed inside a cabin of the vehicle, for example, may include an ambient light, a breathing light, and a virtual light bead displayed by a vehicle-mounted display; or may be disposed outside the cabin of the vehicle, for example, may be a vehicle-mounted headlight, including but not limited to a brake light, a turn light, a low beam light, a high beam light, a daytime running light, and a position light.

With reference to the first aspect, in some implementations of the first aspect, the controlling a change in light effect displayed by a light display device includes: controlling a node at which the light effect displayed by the light display device changes.

The "controlling a node at which the light effect displayed by the light display device changes" may include: controlling a moment at which the light effect displayed by the light display device changes, and/or a specific form of the light effect before and after the light effect changes, for example, the light color and the dynamic effect formed by the light.

In the foregoing technical solution, the node at which the light effect changes is controlled based on the audio attribute, so that the light changes based on at least one of a beat, a speed, and a tune of audio, and an audio expression idea or emotion can be concretized by using the light. This helps improve user experience when the user listens to the audio.

With reference to the first aspect, in some implementations of the first aspect, the node at which the light effect changes is associated with at least one of the following in the audio attribute: a beat point indicated by the beat feature, a point at which a strong beat occurrence frequency indicated by the speed feature changes, and a point at which a tune indicated by the tune feature changes.

For example, the controlling, based on the audio attribute, a node at which the light effect displayed by the light display device changes may include at least one of the following: controlling, based on the beat point, a change in light colors before and after the beat point; controlling, based on the point at which the strong beat occurrence frequency changes, a change in dynamic effect formed by the light before and after the point; and controlling, based on the point at which the tune changes, a change in dynamic effect formed by the light before and after the point.

With reference to the first aspect, in some implementations of the first aspect, the audio attribute further includes a tempo feature of the audio data, and the controlling a node at which the light effect displayed by the light display device changes includes: controlling one or more of light colors before and after the node and a frequency of the node based on the tempo feature, where the frequency of the node may be understood as a speed at which the light effect changes (or referred to as a frequency at which the light effect changes).

It should be noted that, in this application, "before and after the node" includes one or more of the following cases: before the node, after the node, before the node and after the node. This may be selected in a specific implementation process.

In some possible implementations, if the tempo feature indicates a faster tempo change in the audio, an amplitude of a light color change before and after the node is larger; and/or a frequency of the node is higher. The amplitude of the light color change may be understood as: a magnitude of a change in a light color displayed twice adjacently on a same light bead, and a larger difference between red, green, blue (red, green, blue, RGB) values of two adjacent light colors indicates a larger amplitude of the light color change.

In some possible implementations, if the tempo feature indicates a faster tempo change in the audio, more light colors corresponding to the audio are used.

For example, for music with a faster tempo, for example, rock music, the light display device may be controlled to display a faster change in the light effect, and/or an amplitude of a light color change before and after the node is controlled to be larger; for music with a slower tempo, for example, classical music, the light display device may be controlled to display a slower change in the light effect, and/or an amplitude of a light color change before and after the node is controlled to be smaller.

In the foregoing technical solution, expressiveness of the light in the audio is further improved by controlling, with reference to the tempo feature of the audio based on determining the node at which the light effect changes, the light color and/or the speed at which the light effect changes. For example, expressiveness of light effect displayed based on classical music with a weaker tempo is improved, helping further improve user experience of the light effect changing with the music.

With reference to the first aspect, in some implementations of the first aspect, the method further includes: determining delay information, where the delay information includes at least one of the following: first duration required for determining the audio attribute based on the audio data, a first delay generated by transmission of light effect indication information, a second delay generated by encoding and decoding of the light effect indication information, and second duration required for generating first light effect based on the light effect indication information. The light effect indication information is generated based on the audio attribute, and indicates the first light effect displayed by the light display device. The controlling a node at which the light effect displayed by the light display device changes includes: controlling, based on the audio attribute and the delay information, the node at which the light effect displayed by the light display device changes, where light effect before and after the node includes the first light effect.

It should be understood that the controlling, based on the audio attribute and the delay information, the node at which the light effect displayed by the light display device changes includes: performing, based on at least one of the first duration, the second duration, the first delay, and the second delay, delay compensation for the light effect displayed by the light display device, to control the light display device to display corresponding light effect.

In some possible implementations, the light display device that displays the light based on the audio may include two or more links. Each link includes at least one light display device, and a light refresh rate in each of the two or more links may be different from another, and in this case, delay compensation may be performed for each link.

In the foregoing technical solution, a node at which the light effect actually changes can be basically aligned with a node determined based on the audio attribute of the audio data, mitigating a problem of poor user experience caused by a light effect delay.

With reference to the first aspect, in some implementations of the first aspect, the audio attribute further includes a timbre feature, the timbre feature includes a first timbre feature and a second timbre feature, and the controlling a node at which the light effect displayed by the light display device changes includes: controlling, based on the first timbre feature, a node at which light effect displayed by a first light display device changes; and/or controlling, based on the second timbre feature, a node at which light effect displayed by a second light display device changes, where the light display device includes the first light display device and the second light display device.

For example, the first timbre feature indicates related information of a first timbre in the audio data, and the second timbre feature indicates related information of a second timbre in the audio data.

For example, at a same moment, when the audio data includes two or more timbres, each light display device of two or more light display devices may be separately controlled to display the light based on one timbre feature.

In some possible manners, at a same moment, the audio data includes only one timbre, the audio data includes the first timbre within the first duration, and the audio data includes the second timbre within the second duration. In this case, the first light display device may be controlled to display the light based on the first timbre within the first duration, and the second light display device may be controlled to display the light based on the second timbre within the second duration.

In some possible implementations, the first light display device and the second light display device are disposed at different positions. For example, when the method is applied to the cabin, the first light display device and the second light display device may be disposed in different areas of the cabin. For example, the first light display device may be a light strip disposed at a door handle of a driver, and the second light display device may be a light strip disposed at a door handle of a front passenger. Alternatively, the first light display device may be a central display screen (displaying the light effect by using the virtual light bead), and the second light display device may be a light strip disposed at the door handle of the front passenger. Alternatively, the first light display device may be a light strip disposed at the door handle of the driver, and the second light display device may be at least one of a brake light, a turn light, a low beam light, a high beam light, a daytime running light, and a position light.

In some possible implementations, the first light display device and the second light display device may be a same light display device.

In the foregoing technical solution, the light display device may display the light based on the timbre feature of the audio, light display modes of the light display device may be increased, to improve a sense of science and technology experienced by the user when the user uses the light effect changing with the music. In addition, dynamic light effect in a process in which the light effect changes with the music can be further improved, and then user experience is improved.

With reference to the first aspect, in some implementations of the first aspect, the timbre feature includes a human voice timbre feature and/or a musical instrument timbre feature.

For example, the human voice timbre feature may indicate at least one of the following timbres: a male timbre, a female timbre, and a child's timbre.

For example, the musical instrument timbre feature may indicate a timbre of at least one of the following musical instruments: an idiophone, a membranophone, an aerophone, a chordophone, and an electrophone. The idiophone includes but is not limited to: a jew's harp, yunban, a sandalwood clapper. The membranophone includes but is not limited to: a bass drum, a double-sided drum, and an octagonal drum. The aerophone includes but is not limited to: a clarinet, a flute, a Chinese vertical flute, an egg-shaped holed wind instrument, a trumpet, a French horn, a harmonium, an accordion, and a harmonica. The chordophone includes but is not limited to: guqin, a Chinese zither, and Eijieke (Eijieke). The electrophone includes but is not limited to: an electric violin, an electric cello, an electric piano, an electronic organ, electric liuqin, and electric pipa.

With reference to the first aspect, in some implementations of the first aspect, the audio attribute further includes a harmonic feature, the harmonic feature includes a first harmonic feature and a second harmonic feature, and the controlling a node at which the light effect displayed by the light display device changes includes: controlling, based on the first harmonic feature, a node at which light effect displayed by a third light display device changes; and/or controlling, based on the second harmonic feature, a node at which light effect displayed by a fourth light display device changes, where the light display device includes the third light display device and the fourth light display device.

For example, the first harmonic feature indicates related information of a first voice type in the audio data, and the second harmonic feature indicates related information of a second voice type in the audio data.

In some possible implementations, the third light display device and the fourth light display device are disposed at different positions. For example, when the method is applied to the cabin, the third light display device and the fourth light display device may be disposed in different areas of the cabin.

In some possible implementations, the third light display device and the fourth light display device may be a same light display device.

With reference to the first aspect, in some implementations of the first aspect, the audio attribute further includes a chord feature, the chord feature includes a first chord feature and a second chord feature, and the controlling a node at which the light effect displayed by the light display device changes includes: controlling, based on the first chord feature, a node at which light effect displayed by a fifth light display device changes; and/or controlling, based on the second chord feature, a node at which light effect displayed by a sixth light display device changes, where the light display device includes the fifth light display device and the sixth light display device.

For example, the first chord feature indicates related information of a first musical tone in the audio data, and the second chord feature indicates related information of a second musical tone in the audio data.

In some possible implementations, the fifth light display device and the sixth light display device are disposed at different positions. For example, when the method is applied to the cabin, the fifth light display device and the sixth light display device may be disposed in different areas of the cabin.

In some possible implementations, the fifth light display device and the sixth light display device may be a same light display device.

With reference to the first aspect, in some implementations of the first aspect, the method is applied to the cabin, and the method further includes: obtaining a human body feature or identity information of a first user inside the cabin, and the controlling a node at which the light effect displayed by the light display device changes includes: controlling, based on the audio attribute and the human body feature or the identity information, the node at which the light effect displayed by the light display device changes.

For example, the human body feature includes but is not limited to a gender, an age, a mood, and the like.

For example, when the human body feature indicates that the first user is a child, a glaring color is reduced or not used, and/or a frequency of the node is reduced.

For example, when the human body feature indicates that the first user is a female, the light display device is controlled to display a light color preferred by a female.

For example, when the human body feature indicates that the first user is a male, the light display device is controlled to display a light color preferred by a male.

In some possible implementations, the controlling a node at which the light effect displayed by the light display device changes includes: controlling the light colors before and after the node and/or the frequency of the node based on the audio attribute and the human body feature.

In some possible implementations, the controlling, based on the audio attribute and the identity information, the node at which the light effect displayed by the light display device changes may further include: determining a light effect preference of the first user based on the identity information, and controlling the light colors before and after the node and/or the frequency of the node based on the light effect preference. The light effect preference includes a light color preferred by the first user and/or a frequency at which the light effect changes and that is preferred by the first user.

In some possible implementations, identity information of one or more users is stored in the vehicle. If identity information of the user inside the cabin matches the identity information of the one or more users, the light effect preference may be determined based on the identity information of the user inside the cabin.

In the foregoing technical solution, the light effect can be determined with reference to the user preference, the human body feature, and the like. This can meet requirements of users of different ages and/or different preferences, and help improve user interaction experience during use of the light display device.

With reference to the first aspect, in some implementations of the first aspect, the controlling the node at which the light effect displayed by the light display device changes includes: when a vehicle to which the cabin belongs is in a traveling state, the first user is in a driver position of the cabin, and the human body feature indicates that the first user is in a fatigue state, increasing the frequency of the node, and/or controlling light to display warning colors before and after the node.

For example, the warning colors include colors with warning effect, for example, red, yellow, or orange.

In the foregoing technical solution, the light display device displays warning light effect, to help improve user experience and driving safety.

With reference to the first aspect, in some implementations of the first aspect, the method further includes: obtaining environment information outside the cabin, where the environment information includes one or more of temperature information, current season information, and light intensity information, and the controlling a node at which the light effect displayed by the light display device changes includes: controlling, based on the audio attribute and the environment information, one or more of the light colors before and after the node, the frequency of the node, and light luminance before and after the node.

Optionally, the temperature information outside the cabin or the current season information or both are obtained, and the controlling a node at which the light effect displayed by the light display device changes includes: controlling the light colors before and after the node based on the audio attribute, the temperature information outside the cabin and/or the current season information.

For example, when the current season information indicates that a current season is spring, autumn, or winter, and/or the temperature information indicates that a temperature outside the cabin is lower than or equal to a preset temperature, the light colors before and after the node are controlled to be warm; when the current season is summer, and/or the temperature outside the cabin is higher than the preset temperature, the light colors before and after the node are controlled to be cold. For example, the preset temperature may be 20 degrees, 25 degrees, or another temperature.

In the foregoing technical solution, the light color displayed by the light display device is controlled based on the season information or the temperature outside the cabin. In this case, if the season is summer or an external temperature is relatively high, light with a cold color is displayed, so that a person has a cool feeling; if the season is spring, autumn, winter, or the external temperature is relatively low, light with a warm color is displayed, so that the person has a warm feeling.

Optionally, the light intensity information outside the cabin is obtained, and the controlling a node at which the light effect displayed by the light display device changes includes: controlling light luminance before and after the node based on the audio attribute and the light intensity information outside the cabin.

In the foregoing technical solution, in a scenario in which light intensity is relatively low at night, reducing light luminance helps improve driving safety and helps save energy; and in a scenario in which the light intensity is relatively high, increasing the light luminance helps improve user experience.

According to a second aspect, a method for controlling light display is provided. The method includes: obtaining to-be-played audio data; determining an audio attribute of the audio data, where the audio attribute includes at least one of a timbre feature, a chord feature, and a harmonic feature of the audio data; and controlling, based on the audio attribute, a change in light effect displayed by a light display device.

With reference to the second aspect, in some implementations of the second aspect, the timbre feature includes a first timbre feature and a second timbre feature, and the controlling a change in light effect displayed by a light display device includes: controlling, based on the first timbre feature, a node at which light effect displayed by a first light display device changes; and/or controlling, based on the second timbre feature, a node at which light effect displayed by a second light display device changes, where the light display device includes the first light display device and the second light display device.

With reference to the second aspect, in some implementations of the second aspect, the timbre feature includes a human voice timbre feature and/or a musical instrument timbre feature.

With reference to the second aspect, in some implementations of the second aspect, the harmonic feature includes a first harmonic feature and a second harmonic feature, and the controlling a change in light effect displayed by a light display device includes: controlling, based on the first harmonic feature, a node at which light effect displayed by a third light display device changes; and/or controlling, based on the second harmonic feature, a node at which light effect displayed by a fourth light display device changes, where the light display device includes the third light display device and the fourth light display device.

With reference to the second aspect, in some implementations of the second aspect, the chord feature includes a first chord feature and a second chord feature, and the controlling a change in light effect displayed by a light display device includes: controlling, based on the first chord feature, a node at which light effect displayed by a fifth light display device changes; and/or controlling, based on the second chord feature, a node at which light effect displayed by a sixth light display device changes; the light display device includes the fifth light display device and the sixth light display device.

With reference to the second aspect, in some implementations of the second aspect, the audio attribute includes at least one of a beat feature, a speed feature, and a tune feature of the audio data, and the controlling a change in light effect displayed by a light display device includes: controlling, based on the audio attribute, a node at which the light effect displayed by the light display device changes.

With reference to the second aspect, in some implementations of the second aspect, the audio attribute further includes a tempo feature of the audio data, and the controlling a change in light effect displayed by a light display device includes: controlling light colors before and after the node and/or a frequency of the node based on the tempo feature.

With reference to the second aspect, in some implementations of the second aspect, the method further includes: determining delay information, where the delay information includes at least one of the following: first duration required for determining the audio attribute based on the audio data, a first delay generated by transmission of light effect indication information, a second delay generated by encoding and decoding of the light effect indication information, and second duration required for generating first light effect based on the light effect indication information. The light effect indication information is generated based on the audio attribute, and indicates the first light effect displayed by the light display device. The controlling a node at which the light effect displayed by the light display device changes includes: controlling, based on the audio attribute and the delay information, the node at which the light effect displayed by the light display device changes, where light effect before and after the node includes the first light effect.

With reference to the second aspect, in some implementations of the second aspect, the method further includes: obtaining a human body feature or identity information of a first user inside a cabin, and the controlling a change in light effect displayed by a light display device includes: controlling, based on the audio attribute and the human body feature or the identity information, the node at which the light effect displayed by the light display device changes.

With reference to the second aspect, in some implementations of the second aspect, the controlling a change in light effect displayed by a light display device includes: when a vehicle to which the cabin belongs is in a traveling state, the first user is in a driver position of the cabin, and the human body feature indicates that the first user is in a fatigue state, controlling to increase the frequency of the node, and/or controlling light to display warning colors before and after the node.

With reference to the second aspect, in some implementations of the second aspect, the method further includes: obtaining temperature information outside the cabin and/or current seasonal information, and the controlling a change in light effect displayed by a light display device includes: controlling the light colors before and after the node based on the audio attribute, the temperature information outside the cabin and/or the current season information.

With reference to the second aspect, in some implementations of the second aspect, the method further includes: obtaining light intensity information outside the cabin, and the controlling a change in light effect displayed by a light display device includes: controlling light luminance before and after the node based on the audio attribute and the light intensity information outside the cabin.

With reference to the second aspect, in some implementations of the second aspect, the node at which the light effect changes is associated with at least one of the following in the audio attribute: a beat point indicated by the beat feature, a point at which a strong beat occurrence frequency indicated by the speed feature changes, and a point at which a tune indicated by the tune feature changes.

According to a third aspect, an apparatus for controlling light display is provided. The apparatus includes: an obtaining unit, configured to obtain to-be-played audio data; a first determining unit, configured to determine an audio attribute of the audio data, where the audio attribute includes at least one of a beat feature, a speed feature, and a tune feature of the audio data; and a processing unit, configured to control, based on the audio attribute, a node at which light effect displayed by a light display device changes.

With reference to the third aspect, in some implementations of the third aspect, the audio attribute further includes a tempo feature of the audio data, and the processing unit is configured to control one or more of light colors before and after the node and a frequency of the node based on the tempo feature, where the frequency of the node may be understood as a speed at which the light effect changes.

With reference to the third aspect, in some implementations of the third aspect, the apparatus further includes a second determining unit, configured to determine delay information, where the delay information includes at least one of the following: first duration required for determining the audio attribute based on the audio data, a first delay generated by transmission of light effect indication information, a second delay generated by encoding and decoding of the light effect indication information, and second duration required for generating first light effect based on the light effect indication information. The light effect indication information is generated based on the audio attribute, and indicates the first light effect displayed by the light display device. The processing unit is configured to control, based on the audio attribute and the delay information, the node at which the light effect displayed by the light display device changes, where light effect before and after the node includes the first light effect.

With reference to the third aspect, in some implementations of the third aspect, the audio attribute further includes a timbre feature, the timbre feature includes a first timbre feature and a second timbre feature, and the processing unit includes a first processing unit and a second processing unit, where the first processing unit is configured to control, based on the first timbre feature, a node at which light effect displayed by a first light display device changes; and/or the second processing unit is configured to control, based on the second timbre feature, a node at which light effect displayed by a second light display device changes, where the light display device includes the first light display device and the second light display device.

In some possible implementations, the first processing unit and the second processing unit are a same processing unit.

With reference to the third aspect, in some implementations of the third aspect, the timbre feature includes a human voice timbre feature and/or a musical instrument timbre feature.

With reference to the third aspect, in some implementations of the third aspect, the audio attribute further includes a harmonic feature, the harmonic feature includes a first harmonic feature and a second harmonic feature, and the processing unit includes a third processing unit and a fourth processing unit, where the third processing unit is configured to control, based on the first harmonic feature, a node at which light effect displayed by a third light display device changes; and/or the fourth processing unit is configured to control, based on the second harmonic feature, a node at which light effect displayed by a fourth light display device changes, where the light display device includes the third light display device and the fourth light display device.

In some possible implementations, the third processing unit and the fourth processing unit are a same processing unit.

With reference to the third aspect, in some implementations of the third aspect, the audio attribute further includes a chord feature, and the chord feature includes a first chord feature and a second chord feature, and the processing unit includes a fifth processing unit and a sixth processing unit, where the fifth processing unit is configured to control, based on the first chord feature, a node at which light effect displayed by a fifth light display device changes; and/or the sixth processing unit is configured to control, based on the second chord feature, a node at which light effect displayed by a sixth light display device changes, where the light display device includes the fifth light display device and the sixth light display device.

In some possible implementations, the fifth processing unit and the sixth processing unit are a same processing unit.

With reference to the third aspect, in some implementations of the third aspect, the obtaining unit is further configured to obtain a human body feature or identity information of a first user inside a cabin, and the processing unit is configured to control, based on the audio attribute and the human body feature or the identity information, the node at which the light effect displayed by the light display device changes.

With reference to the third aspect, in some implementations of the third aspect, the processing unit is configured to: when a vehicle to which the cabin belongs is in a traveling state, the first user is in a driver position of the cabin, and the human body feature indicates that the first user is in a fatigue state, increase the frequency of the node, and/or control light to display warning colors before and after the node.

With reference to the third aspect, in some implementations of the third aspect, the obtaining unit is further configured to obtain environment information outside the cabin, where the environment information includes one or more of temperature information, current season information, and light intensity information, and the processing unit is configured to control, based on the audio attribute and the environment information, one or more of the light colors before and after the node, the frequency of the node, and light luminance before and after the node.

Optionally, the obtaining unit is further configured to obtain temperature information outside the cabin and/or current seasonal information, and the processing unit is configured to control the light colors before and after the node based on the audio attribute, the temperature information outside the cabin and/or the current season information.

Optionally, the obtaining unit is further configured to obtain light intensity information outside the cabin, and the processing unit is configured to control light luminance before and after the node based on the audio attribute and the light intensity information outside the cabin.

With reference to the third aspect, in some implementations of the third aspect, the node at which the light effect changes is associated with at least one of the following in the audio attribute: a beat point indicated by the beat feature, a point at which a strong beat occurrence frequency indicated by the speed feature changes, and a point at which a tune indicated by the tune feature changes.

According to a fourth aspect, an apparatus for controlling light display is provided. The apparatus includes: an obtaining unit, configured to obtain to-be-played audio data; a first determining unit, configured to determine an audio attribute of the audio data, where the audio attribute includes at least one of a timbre feature, a chord feature, and a harmonic feature of the audio data; and a processing unit, configured to control, based on the audio attribute, a change in light effect displayed by a light display device.

With reference to the fourth aspect, in some implementations of the fourth aspect, the timbre feature includes a first timbre feature and a second timbre feature, and the processing unit is configured to: control, based on the first timbre feature, a node at which light effect displayed by a first light display device changes; and/or control, based on the second timbre feature, a node at which light effect displayed by a second light display device changes, where the light display device includes the first light display device and the second light display device.

With reference to the fourth aspect, in some implementations of the fourth aspect, the timbre feature includes a human voice timbre feature and/or a musical instrument timbre feature.

With reference to the fourth aspect, in some implementations of the fourth aspect, the harmonic feature includes a first harmonic feature and a second harmonic feature, and the processing unit is configured to: control, based on the first harmonic feature, a node at which light effect displayed by a third light display device changes; and/or control, based on the second harmonic feature, a node at which light effect displayed by a fourth light display device changes, where the light display device includes the third light display device and the fourth light display device.

With reference to the fourth aspect, in some implementations of the fourth aspect, the chord feature includes a first chord feature and a second chord feature, and the processing unit is configured to: control, based on the first chord feature, a node at which light effect displayed by a fifth light display device changes; and/or control, based on the second chord feature, a node at which light effect displayed by a sixth light display device changes; the light display device includes the fifth light display device and the sixth light display device.

With reference to the fourth aspect, in some implementations of the fourth aspect, the audio attribute includes at least one of a beat feature, a speed feature, and a tune feature of the audio data, and the processing unit is further configured to control, based on the audio attribute, a node at which light effect displayed by a light display device changes.

With reference to the fourth aspect, in some implementations of the fourth aspect, the audio attribute further includes a tempo feature of the audio data, and the processing unit is further configured to control light colors before and after the node and/or a frequency of the node based on the tempo feature.

With reference to the fourth aspect, in some implementations of the fourth aspect, the apparatus further includes a second determining unit, configured to determine delay information, where the delay information includes at least one of the following: first duration required for determining the audio attribute based on the audio data, a first delay generated by transmission of light effect indication information, a second delay generated by encoding and decoding of the light effect indication information, and second duration required for generating first light effect based on the light effect indication information. The light effect indication information is generated based on the audio attribute, and indicates the first light effect displayed by the light display device. The processing unit is configured to control, based on the audio attribute and the delay information, the node at which the light effect displayed by the light display device changes, where light effect before and after the node includes the first light effect.

With reference to the fourth aspect, in some implementations of the fourth aspect, the obtaining unit is further configured to obtain a human body feature or identity information of a first user inside a cabin, and the processing unit is configured to control, based on the audio attribute and the human body feature or the identity information, the node at which the light effect displayed by the light display device changes.

With reference to the fourth aspect, in some implementations of the fourth aspect, the processing unit is configured to: when a vehicle to which the cabin belongs is in a traveling state, the first user is in a driver position of the cabin, and the human body feature indicates that the first user is in a fatigue state, control to increase the frequency of the node, and/or control light to display warning colors before and after the node.

With reference to the fourth aspect, in some implementations of the fourth aspect, the obtaining unit is further configured to obtain temperature information outside the cabin and/or current seasonal information, and the processing unit is further configured to control the light colors before and after the node based on the audio attribute, the temperature information outside the cabin and/or the current season information.

With reference to the fourth aspect, in some implementations of the fourth aspect, the obtaining unit is further configured to obtain light intensity information outside the cabin, and the processing unit is further configured to control light luminance before and after the node based on the audio attribute and the light intensity information outside the cabin.

With reference to the fourth aspect, in some implementations of the fourth aspect, the node at which the light effect changes is associated with at least one of the following in the audio attribute: a beat point indicated by the beat feature, a point at which a strong beat occurrence frequency indicated by the speed feature changes, and a point at which a tune indicated by the tune feature changes.

According to a fifth aspect, an apparatus for controlling light display is provided. The apparatus includes: a memory, configured to store a program; and a processor, configured to execute the program stored in the memory. When the program stored in the memory is executed, the processor is configured to perform the method according to any one of the possible implementations of the first aspect or the second aspect.

According to a sixth aspect, a mobile carrier is provided. The mobile carrier includes the apparatus and the light display device in any one of the possible implementations of the third aspect to the fifth aspect. The light display device may include an ambient light, a breathing light, a vehicle-mounted display, and a head-up display (head-up display, HUD), and may further include another device that can display light. The light display device is disposed at least one of a dashboard, a central display screen, a back of a front-row seat head pillow, a front-row central armrest, and a front passenger seat, or may be disposed at another position in a vehicle. This is not specifically limited in this embodiment of this application.

According to a seventh aspect, a computer program product is provided. The computer program product includes computer program code, and when the computer program code is run on a computer, the computer is enabled to perform the method according to any one of the possible implementations of the first aspect or the second aspect.

It should be noted that all or some of the computer program code may be stored in a first storage medium. The first storage medium may be encapsulated together with a processor, or may be encapsulated separately from a processor. This is not specifically limited in embodiments of this application.

According to an eighth aspect, a computer-readable medium is provided. The computer-readable medium stores program code, and when the computer program code is run on a computer, the computer is enabled to perform the method according to any one of the possible implementations of the first aspect or the second aspect.

According to a ninth aspect, a chip is provided. The chip includes a processor configured to invoke a computer program or computer instructions stored in a memory, so that the processor is enabled to perform the method according to any one of the possible implementations of the first aspect or the second aspect.

With reference to the ninth aspect, in a possible implementation, the processor is coupled to the memory by using an interface.

With reference to the ninth aspect, in a possible implementation, the chip further includes the memory. The memory stores the computer program or the computer instructions.

In this embodiment of this application, the light effect can be designed based on audio features in one or more dimensions. This helps improve a degree of cooperation between the light effect and audio, improve expressiveness of the light effect in the audio, and further improve driving experience of a user. The node at which the light effect changes is controlled based on the audio attribute, so that the light changes based on at least one of a beat, a speed, and a tune of audio, and an audio expression idea or emotion can be concretized by using the light. This helps improve experience when the user listens to the audio. Expressiveness of the light in the audio is further improved by controlling, with reference to the tempo feature of the audio based on determining the node at which the light effect changes, the light color and/or the speed at which the light effect changes. For example, expressiveness of the light effect based on the classical music with a weaker tempo is improved. Further, the light display device may further display the light based on at least one of the timbre feature, the chord feature, and the harmonic feature of the audio, light display modes of the light display device may be increased, to improve a sense of science and technology experienced by the user when the user uses the light effect changing with the music. In addition, dynamic light effect in a process in which the light effect changes with the music can be further improved, and then user experience is improved. In addition, the light effect can be further determined with reference to the user preference, the human body feature, and the like. This can meet requirements of users of different ages and/or different preferences, and help improve user interaction experience during use of the light display device. Further, when the driver is in a fatigue state, the light display device displays warning light effect, to help improve driving safety. In addition, in this application, delay compensation is performed for the light effect, so that a node at which the light effect actually changes can be basically aligned with a node determined based on the audio attribute of the audio data, mitigating a problem of poor user experience caused by a light effect delay.

### BRIEF DESCRIPTION OF DRAWINGS

FIG. 1 is a block diagram of a vehicle according to an embodiment of this application;
FIG. 2(a) to FIG. 2(d) are a diagram of an application scenario of a method for controlling light display according to an embodiment of this application;
FIG. 3 is a block diagram of a system for controlling light display according to an embodiment of this application;
FIG. 4 is a schematic flowchart of a method for controlling light display according to an embodiment of this application;
FIG. 5 is a schematic flowchart of a method for controlling light display according to an embodiment of this application;
FIG. 6 is a schematic flowchart of a method for controlling light display according to an embodiment of this application;
FIG. 7 is a schematic flowchart of a method for controlling light display according to an embodiment of this application;
FIG. 8 is a schematic flowchart of a method for controlling light display according to an embodiment of this application;
FIG. 9 is a diagram of an application scenario of a method for controlling light display according to an embodiment of this application;
FIG. 10 is a block diagram of an apparatus for controlling light display according to an embodiment of this application; and
FIG. 11 is a block diagram of an apparatus for controlling light display according to an embodiment of this application.

### DESCRIPTION OF EMBODIMENTS

The following describes technical solutions of embodiments in this application with reference to accompanying drawings.

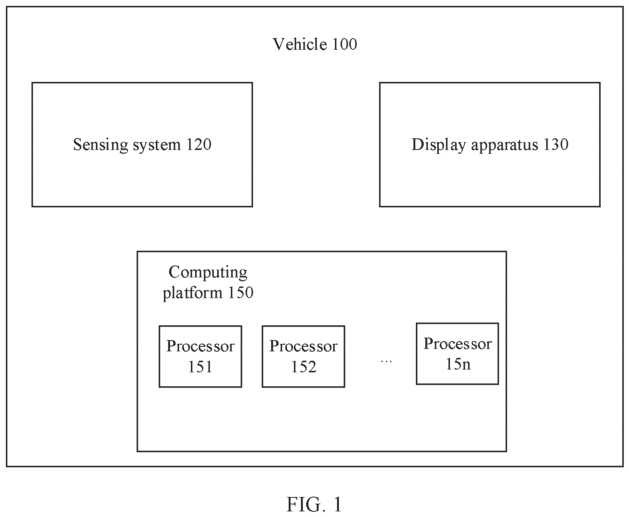

FIG. 1 is a functional block diagram of a vehicle 100 according to an embodiment of this application. The vehicle 100 may include a sensing system 120, a display apparatus 130, and a computing platform 150. The sensing system 120 may include several types of sensors that sense surrounding environment information of the vehicle 100. For example, the sensing system 120 may include a positioning system. The positioning system may be a global positioning system (global positioning system, GPS), or may be one or more of a BeiDou system or another positioning system, an inertia measurement unit (inertial measurement unit, IMU), a lidar, a millimeter-wave radar, an ultrasonic radar, a visual sensor, a sound sensor, a steering angle sensor, or an image shooting apparatus.

The sensing system 120 may further include one or more cameras that may be installed inside or outside a smart cabin, and configured to capture an image inside or outside the cabin, for example, a camera of a driver monitoring system (driver monitor system, DMS), a camera of a cabin monitoring system (cabin monitor system, CMS), and a camera of a dashcam (dashcam). Cameras configured to capture images inside and outside the cabin may be a same camera, or may be different cameras. The one or more cameras may be configured to collect facial information of a user in the vehicle, and the like. For example, a camera and a millimeter-wave radar inside the cabin may be configured to collect an action, a gesture, or the like of the user in the vehicle, and a microphone inside the cabin may be configured to collect audio information or the like in the vehicle.

The display apparatus 130 in embodiments of this application mainly includes a light display device, configured to display light. For example, the light display device may be a breathing light or an ambient light formed by a light emitting diode (light emitting diode, LED) light strip, and the LED light strip (briefly referred to as a light strip) may include a plurality of LED light beads. Alternatively, the light display device may be another type of a light. Alternatively, the light display device may be disposed on a vehicle-mounted display, for example, a central display screen, or a rear-view mirror display, or may be disposed on a back of a front-row seat pillow or on a front-row central armrest. Alternatively, the light display device may further include a vehicle-mounted display and an HUD, and may further include another device that can display the light.

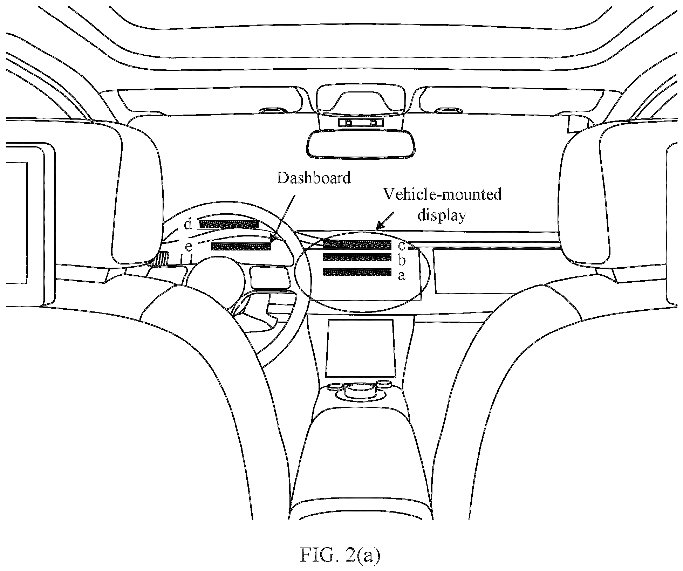

In some possible implementations, the light display device in embodiments of this application may include a light bead or a light strip (or referred to as a light bar), and an installation position of the light display device is shown in FIG. 2(a). For example, the light display device may be disposed on the central display screen or a dashboard, or may be disposed on a lifting camera, or may be disposed at another position of the cabin. Further, the light display device may be a lifting apparatus. For example, when the light display device is disposed on the central display screen, and the light display device is not required, the light display device may be retracted to a back of the display and does not perform display. A position may be set as a position a shown in FIG. 2(a). When the light display device displays light effect, the light display device may be disposed at positions b and c shown in FIG. 2(a) through lifting control, or may be suspended at an upper left corner or an upper right corner of the central display screen. When the light display device is disposed on the dashboard, the light display device may be disposed in a position e shown in FIG. 2(a), namely, a middle position of the dashboard, or may be raised to a position above the dashboard, namely, a position d shown in FIG. 2(a).

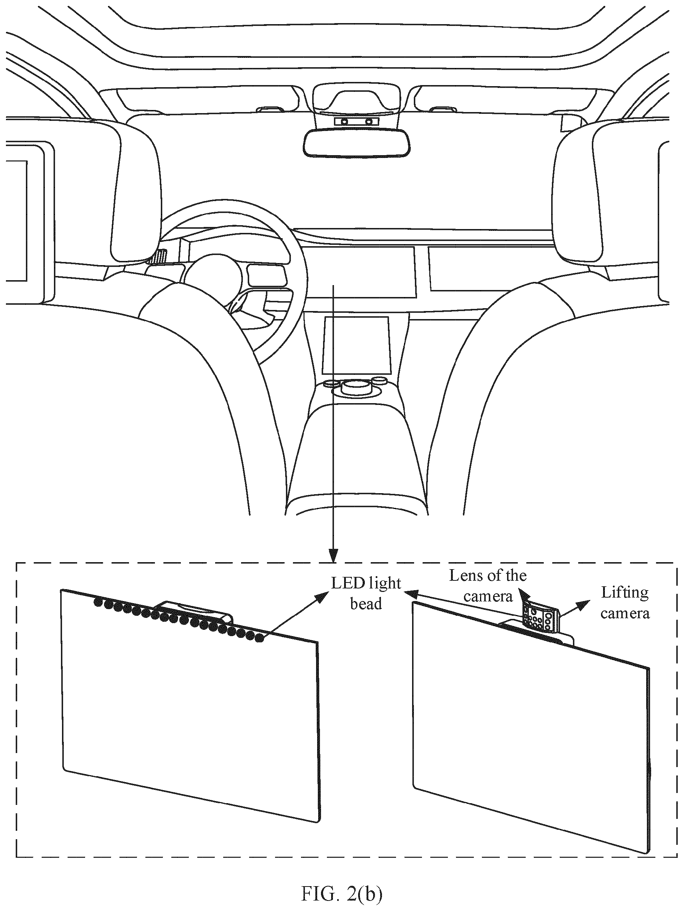

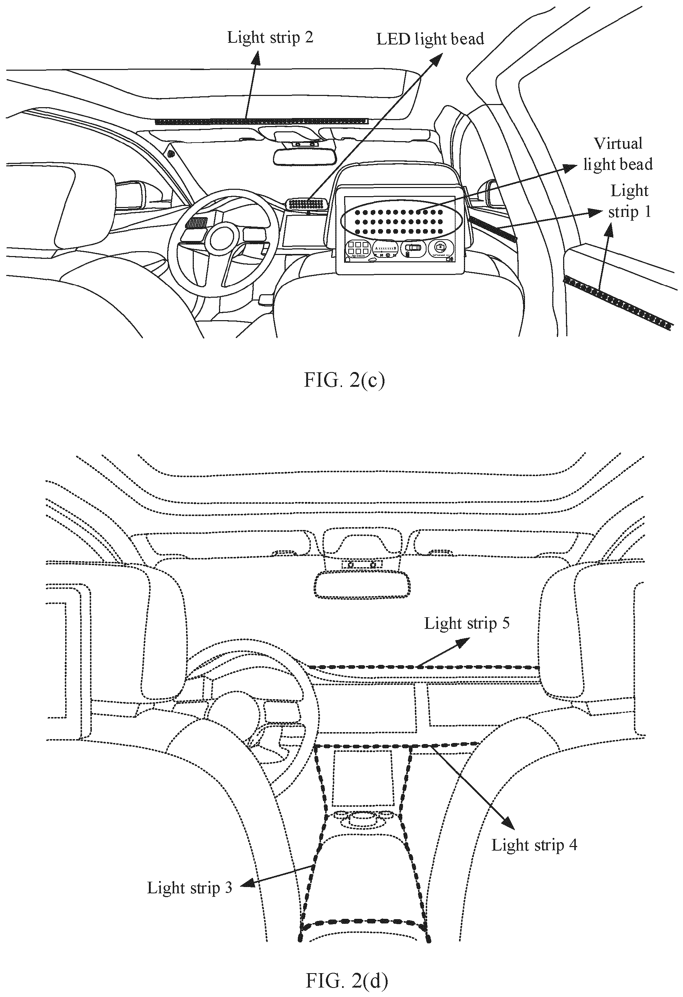

In some possible implementations, the light display device may include a light strip disposed at an edge of the central display screen, where the light strip includes several LED light beads; or the light display device may alternatively include LED light beads disposed on the lifting camera, as specifically shown in FIG. 2(b). Further, the light bead in the light display device is an LED light bead, or may be a virtual light bead displayed in the vehicle-mounted display, as specifically shown in FIG. 2(c). Alternatively, as shown in FIG. 2(c), the light display device may further include a light strip 1 disposed at a door handle inside the cabin, or a light strip 2 disposed at a top of the cabin. Alternatively, as shown in FIG. 2(d), the light display device may further include a light strip 3 disposed at a central handle in a front row of the cabin, a light strip 4 disposed below the central display screen and a front passenger display, or a light strip 5 disposed below a front windshield. Alternatively, the light display device may further include a light strip disposed in a position like a door handle, an air exhaust vent of an air conditioner, a storage box, a cup holder, a sound box, or a fastener inside the cabin. This is not specifically limited in embodiments of this application.

In some possible implementations, the light display device may further include a headlight, a taillight, a brake light, and the like of the vehicle.

Some or all functions of the vehicle 100 are controlled by the computing platform 150. The computing platform 150 may include processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), like a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the reconfigurable hardware circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may call the instructions in the memory to execute the instructions and implement a corresponding function.

In embodiments of this application, the processor may identify a feature like a tempo feature, a dynamics feature, a speed feature, or a tune feature of music, and generate the light effect based on at least one of the identified tempo feature, dynamics feature, speed feature, and tune feature of the music. In addition, the processor may further obtain the environment information detected by the sensing system 120, a human body feature or identity information of a user, and adjust the light effect with reference to the information and the music features. It should be understood that the "light effect" (briefly referred to as light effect) includes at least one of a displayed light color, displayed light luminance, and displayed dynamic effect formed by the light. The dynamic effect formed by the light includes but is not limited to: a color gradient, a light flash, and a light rhythm. The environment information may include environments inside and outside the vehicle, for example, light intensity and a weather condition. The human body feature of the user includes but is not limited to a gender, an age, a mood, and the like. The identity information of the user includes but is not limited to biometric feature information stored in a mobile carrier, an account, and the like. The biometric feature information includes but is not limited to fingerprint information, palmprint information, facial information, iris information, gait information, and the like. The account may include account information for logging in to an in-vehicle infotainment system, and the like. In some possible implementations, the environment information, the human body feature of the user, and the identity information of the user may be further stored in the memory of the computing platform 150 in a form of data. In some possible implementations, the processor may process the environment information, the human body feature of the user, and the identity information of the user, to obtain a parameterized indicator to indicate the light display device to display the light effect.

It should be understood that the foregoing operations may be performed by a same processor, or may be performed by one or more processors. This is not specifically limited in embodiments of this application.

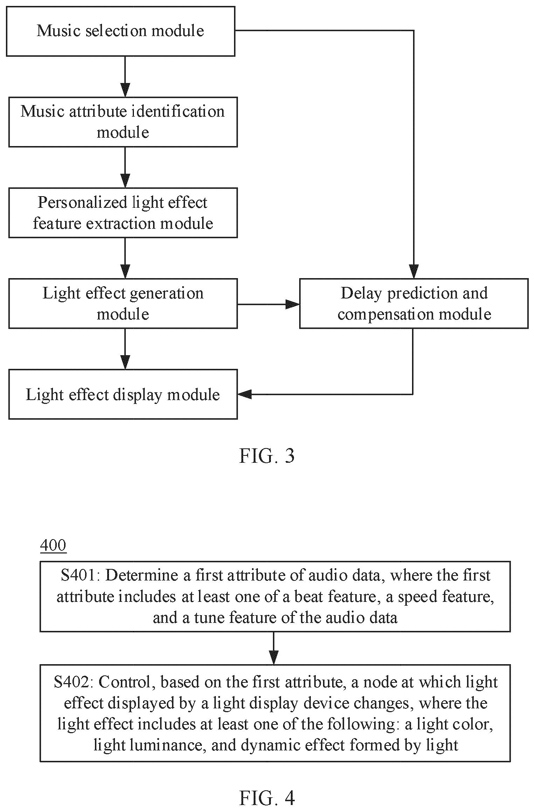

The following describes in detail a working procedure of a system for controlling light display with reference to FIG. 3. FIG. 3 is an architecture diagram of a system for controlling light display according to an embodiment of this application. The system includes a music selection module, a music attribute identification module, a personalized light effect feature extraction module, a delay prediction and compensation module, a light effect generation module, and a light effect display module. For example, the music selection module, the music attribute identification module, the personalized light effect feature extraction module, the delay prediction and compensation module, and the light effect generation module may include one or more processors in the computing platform 150 shown in FIG. 1. The light effect display module may include one or more light display devices in the display apparatus 130 shown in FIG. 1. The music selection module is configured to determine, based on a selection of the user, audio used to generate the light effect, and then perform audio segmentation in real time. Further, the music selection module inputs the audio segmented in real time to the music attribute identification module. The music attribute identification module identifies features of the music, such as dynamics, a beat, a speed, a tune, a human voice timbre, a musical instrument timbre, a harmony, a chord, and lyrics, and determines, based on the features, an attribute required for generating the light effect, like a node at which the light effect changes, a gradient point on the light strip, and a changing light strip. Optionally, the music attribute identification module inputs attribute information required for generating the light effect into the personalized light effect feature extraction module. The module may determine a light effect style based on a current music style with reference to an environment attribute, the human body feature of the user, and/or the facial information of the user, and then input the light effect style into the light effect generation module. The light effect generation module generates the light effect based on a music attribute and the light effect style, and controls the light display module to display the light effect. In some possible implementations, the music selection module inputs the audio segmented in real time to the delay prediction and compensation module. The module predicts an algorithm delay, a transmission delay, and an encoding and decoding delay, and adds light effect compensation to a position in which a delay exists in the light effect generated by the light effect generation module.

It should be understood that the foregoing modules and apparatuses are merely examples. In actual application, the foregoing modules and apparatuses may be added or deleted based on an actual requirement. In an example, the personalized light effect feature extraction module and the light effect generation module in FIG. 3 may be combined into one module, that is, functions of the two modules are implemented by one module.

For example, a correspondence between an audio feature and a light effect feature determined by the music attribute identification module is shown in Table 1. The light effect feature may include time when the light effect changes (or referred to as a node at which the light effect changes), for example, a node at which light flashes, a node at which a light color changes, or a node at which an animation form changes. The light effect feature may further include another feature, for example, a light color gradient direction, an amplitude of a light color change, and a light effect type. For example, the correspondence between the audio feature and the light effect feature is shown as follows:
(1) Dynamics feature: The dynamics feature is also referred to as a loudness feature. For example, alto intensity may be used as a magnitude of dynamics. In some possible implementations, a maximum value point in an audio dynamics (loudness) change curve may be determined as the node at which the light effect changes, for example, the node at which the light flashes (or referred to as a node at which the light luminance changes).
(2) Beat feature: In a narrow sense, beats (beats) are intervals of quarter notes of a music score. It should be understood that a beat of each measure may include a strong beat and a weak beat; or a beat of each measure may include a strong beat, a moderately strong beat, and a weak beat. For one beat, a part at which a first half beat and a second half beat connect is a beat point. For example, the beat point may be used as the node at which the light effect changes, for example, the node at which the light color changes.
In an example, for music with a relatively small amplitude of a loudness change like classical music, the beat point may be used as the node at which the light effect changes.
(3) Speed feature: The speed feature is a strong beat occurrence frequency. In an example, the amplitude of the light color change may be adjusted based on the speed feature. For example, a higher strong beat occurrence frequency indicates a larger amplitude of the light color change. The amplitude of the light color change may be understood as: a magnitude of a change in a light color displayed twice adjacently on a same light bead, and a larger difference between RGB values of two adjacent light colors indicates a larger amplitude of the light color change. In still another example, when the speed feature changes, a strong beat point at a change location is used as the node at which the light effect changes, for example, a node at which a light effect animation form changes, for example, a node at which the light effect animation form changes from a dot flashing animation to a light and shadow gradient animation. A part at which a first half beat and a second half beat of the strong beat connect is the strong beat point. For example, the strong beat occurrence frequency is classified into a low speed, a medium speed, and a high speed. When the strong beat occurrence frequency changes from the low speed to the medium speed, a strong beat point at a change location is used as the node at which the light effect changes. For example, if the strong beat occurrence frequency is less than 14 beats per minute, the strong beat is the low speed; if the strong beat occurrence frequency is 14 to 27 beats per minute, the strong beat is the medium speed; if the strong beat occurrence frequency is more than 27 beats per minute, the strong beat is the high speed. It should be understood that division of the speed feature is merely an example for description. In a specific implementation process, another division manner may be used.
In some possible implementations, the node at which the light color changes may be determined by comprehensively considering the dynamics feature and the beat feature. For example, the node at which the light color changes may be determined by performing weighted summation on the dynamics feature and the beat feature, and weights of the dynamics feature and the beat feature may be determined based on the speed feature.
(4) Tune feature: A light gradient direction may be determined based on whether a tune ascends or descends. For example, if the tune ascends, a light design of a gradient that moves upward or moves toward a position of the user. It should be understood that, an ascending tune moves from lower to higher in scale step, and a descending tune moves from higher to lower in scale step. For example, from a note do to a note re is an ascending tune, and from a note re to a note do is a descending tune.
(5) Human voice timbre feature: Music includes a plurality of human voices, and the human voices may be classified into male voices and female voices based on a gender. Further, one or a group of light display devices in a plurality of light display devices are configured to display the light effect based on a male timbre; another or another group of light display devices in the plurality of light display devices are configured to display the light effect based on a female timbre.
(6) Musical instrument timbre feature: When timbres of a plurality of musical instruments are identified in the audio, one or a group of light display devices in the plurality of light display devices may be configured to display the light effect based on audio of one musical instrument.
For example, the plurality of light display devices include a light strip at a door handle of a driver (or referred to as a first group of light display devices), a light strip at a door handle of a front passenger (or referred to as a second group of light display devices), a light strip at a left door handle in a second row (or referred to as a third group of light display devices), a light strip at a right door handle in the second row (or referred to as a fourth group of light display devices), and a light strip at the central display screen (or a fifth group of light display devices). When specific audio includes voices of a guitar, a bass, a piano, and a drum kit, four groups of light display devices in the first group to the fifth group of light display devices may be respectively responsible for displaying the light effect based on audio of the guitar, the bass, the piano, and the drum kit.
(7) Harmonic and chord features: A plurality of lights are used. Each or each group of lights are responsible for displaying the light effect based on either a harmonic feature or a chord feature.
(8) Lyrics feature: The light effect type and/or a frequency at which the light effect changes may be determined based on an emotion expressed by the lyrics. For example, when the emotion expressed by the lyrics is a happy emotion or a positive emotion, there are relatively abundant light effect types and/or the frequency at which the light effect changes is relatively high; when the emotion expressed by the lyrics is a sad emotion, there are relatively simple light effect types and/or the frequency at which the light effect changes is relatively low.
(9) Pitch feature: The pitch (pitch) is a fundamental frequency, which can describe a main pitch of music and a human voice. In some possible implementations, a maximum value point of the pitch may be determined as the node at which the light effect changes, for example, the node at which the light flashes.

**Table 1 Correspondence between an audio feature and a light effect feature**

| Feature | **Change in light effect and specific light effect setting** |
|---|---|
| Dynamics | Use a point with greater dynamics as a node at which the light effect changes |
| Beat | Add a beat feature as the node at which the light effect changes |
| Speed | Use a location at which a strong beat occurrence frequency changes as the node at which the light effect changes |
| Tune | Use a location at which an ascending tune changes to a descending tune as the node at which the light effect changes |
| Human voice timbre | Two-person chorus: A plurality of lights are displayed separately, and each or each group of lights are responsible for a voice of a specific person |
| Musical instrument timbre | Multiple musical instruments: A plurality of lights are displayed separately, and each or each group of lights are responsible for a specific musical instrument |
| Harmony and chord | A plurality of lights are displayed separately, and each or each group of lights are responsible for a specific musical tone/voice type |
| Lyrics | Light effect type and/or change frequency |
| Pitch | A point with a maximum pitch is used as the node at which the light effect changes |

For example, a correspondence between each feature determined by the personalized light effect feature extraction module and the light effect style is shown in Table 2. The light effect style may include the light color, the frequency at which the light effect changes, the light luminance, and the like. For example, the correspondence between each feature and the light effect style is shown as follows:
(1) Music style feature: A music style may be determined according to an audio attribute identification algorithm, or music tag information carried in obtained audio data, or may be determined in another manner. This is not specifically limited in this embodiment of this application. If the music style is classical music or instrumental music, a corresponding light effect style is fewer light colors and a low frequency at which the light effect changes. If the music style is rock music or heavy metal music, a corresponding light effect style is more light colors and a high frequency at which the light effect changes. If the music style is lyrical music, a corresponding light effect style is moderate light colors and a moderate frequency at which the light effect changes.
   In some possible implementations, the music style feature includes the tempo feature, and the light color or the frequency at which the light effect changes or both are determined based on the tempo feature. A tempo (tempo) means a quantity of beats (or referred to as a note density) in a unit of time. For example, the note density may be used to represent the tempo. For example, a higher note density indicates a faster music tempo in a unit of time. Further, if the tempo feature indicates a faster tempo of the audio, more changeable light colors and/or a higher frequency at which the light effect changes may be controlled based on the audio. For example, if the tempo feature indicates a faster tempo change in the audio, an amplitude of a light color change before and after the determined node at which the light effect changes is larger; and/or a frequency of the determined node at which the light effect changes is higher. The amplitude of the light color change may be understood as: a magnitude of a change in a light color displayed twice adjacently on a same light bead, and a larger difference between RGB values of two adjacent light colors indicates a larger amplitude of the light color change.
(2) Environment attribute feature: The environment attribute feature may include at least one of light intensity information, temperature information, and season information. For example, the light luminance may be determined based on ambient light intensity. For example, when the ambient light intensity reaches 10000 lux (luminance, lux) or above, the light luminance may be set to maximum luminance that the light display device can reach, namely, 100%. When the ambient light intensity is between 10000 lux and 500 lux, the light luminance may be set to 100% to 40% of the maximum luminance that the light display device can reach. A higher ambient light intensity indicates higher light luminance. When the ambient light intensity is lower than 500 lux, the light luminance can be set to 40% of the maximum luminance that the light display device can reach.
   The light color is determined based on a season and/or an external temperature. For example, when the external temperature is higher than a preset temperature and/or when a current season is summer, the light color may be mainly a cool color. When the external temperature is lower than or equal to the preset temperature and/or the current season is any one of spring, autumn, and winter, the light color may be mainly a warm color. The cold color means a color close to a green system in a color spectrum, for example, green, blue, and purple. The warm color means a color close to a red system in the color spectrum, for example, reddish purple, red, orange, and yellow. For example, the preset temperature may be 20 degrees, 25 degrees, or another temperature.
(3) Human body feature of the user: The light effect style is determined based on an age group of the user. For example, when the user is older than or equal to 18 and younger than or equal to 35, a light effect style with more light colors and a higher frequency at which the light effect changes is used; when the user is older than or equal to 36, a light effect style with fewer light colors and a lower frequency at which the light effect changes is used.

When the driver is in a fatigue state, a light effect style with a higher frequency at which the light effect changes is used, and/or the light color is mainly a color with warning effect, like yellow or orange, and/or higher light luminance is used.

When there is a child inside the cabin, a glaring color is reduced or not used, and/or a frequency at which the light flashes is reduced. For example, the glaring color may include red, blue, and purple.

**Table 2 Correspondence between each feature and a light effect style**

| **Feature** | **Light effect style and specific light effect setting** |
|---|---|
| Music style | Classical/Instrumental music: fewer light colors, and a low frequency at which light effect changes |
| | Rock and heavy metal music: more light colors, and a high frequency at which the light effect changes |
| | Lyrical music: moderate light colors, and a moderate frequency at which the light effect changes |
| Environment attribute | Ambient light intensity: adjust light luminance based on the ambient light intensity |
| | Activate fragrance: more light colors, and a higher frequency at which the light effect changes |
| | Deactivate fragrance: fewer light colors, and a lower frequency at which light effect changes |
| | It is spring, autumn, winter, and/or an external temperature is below or equal to a preset temperature: light with a warm color |
| | It is summer and/or the external temperature is higher than the preset temperature: light with a cool color |
| Human body feature of a user | Determine the light effect style based on an age |
| | 18 to 35 years old: more color changes, and rich dynamic effect |
| | Over 36 years old: fewer color changes, and mainly simple dynamic effect |
| | Driver in a fatigue state: use light with warning effect |
| | Child inside a cabin: Reduce or do not use a glaring color, and/or reduce a frequency at which a light flashes |

In some possible implementations, a preferred light effect style of the user may be further determined based on the identity information of the user.

In some possible implementations, when the light color and the frequency at which the light effect changes are determined, the music style, the environment attribute, and the human body feature and/or the identity information of the user may be comprehensively considered. Weights occupied by the features when the light color and the frequency at which the light effect changes are determined may be different. For example, weights occupied by the three aspects may be 0.7, 0.1, and 0.2 respectively, or may be other weights. This is not specifically limited in this embodiment of this application. In some possible implementations, a weight occupied by each aspect may be determined based on a running status of the vehicle. For example, when the vehicle is in a parked state, the weights occupied by the three aspects may be 0.9, 0.05, and 0.05 respectively; and when the vehicle is in a traveling state, the weights occupied by the three aspects may be 0.5, 0.2, and 0.3 respectively.

In some possible implementations, based on various features of the audio data shown in Table 1, the node at which the light effect changes, namely, a moment at which the light effect changes, may be determined; based on some other features shown in Table 2, specific light effect displayed based on the audio data, the light color, the light luminance, and the like may be determined. For example, light effect, a light color, light luminance, and the like before and/or after the node at which the light effect changes may be determined.

FIG. 4 is a method 400 for controlling light display according to an embodiment of this application. The method 400 may be applied to the vehicle 100 shown in FIG. 1, and the method may be further performed by the system shown in FIG. 3. The method 400 includes the following steps.

S401: Determine a first attribute of audio data, where the first attribute includes at least one of a beat feature, a speed feature, and a tune feature of the audio data.

For example, the method may be applied to a cabin of the vehicle 100 in the foregoing embodiment, or may be applied to a field of light control in a smart home.

For example, the beat feature, the speed feature, and the tune feature may be the features shown in Table 1 in the foregoing embodiment.

For example, a beat of the audio data may be determined by using a note onset detection (onset detection) algorithm. For example, according to the note onset detection algorithm, strong low-frequency onset (for example, a location at which a drum beat exists) is used as a roughly estimated beat location. Further, a beat point is determined through short-time energy estimation. Short-term energy means a change in an energy average value of signal energy in a time period. For example, the time period may be 500 milliseconds, or another time period.

For example, a strong beat occurrence frequency may be determined by using a tempo detection algorithm. For example, according to the tempo detection algorithm, a note density (or referred to as a beat frequency, namely, a quantity of beats in a unit of time) is identified, to determine a tempo of the audio. Further, a location and a quantity of strong beats are determined with reference to short-time energy, to determine a strong beat occurrence frequency.

For example, a maximum loudness value may be further determined by using the short-time energy, and a music melody identification algorithm may be used to determine a tune change status in the audio data. It should be understood that another algorithm may be used to determine a dynamics feature, the beat feature, the speed feature, the tune feature, and the like of the audio data. This is not specifically limited in this embodiment of this application.

S402: Control, based on the first attribute, a node at which light effect displayed by a light display device changes, where the light effect includes at least one of the following: a light color, light luminance, and dynamic effect formed by light.

For example, the dynamic effect formed by the light includes but is not limited to: a color gradient, a light flash, and a light rhythm.

For example, for a method for determining, based on the first attribute, the node at which the light effect displayed by the light display device of the cabin changes, refer to Table 1 and descriptions of corresponding parts.

In an example, an alto intensity change curve is generated based on an alto intensity change, to determine a maximum value point on the curve as a node at which the light flashes.

In still another example, the beat point is determined based on the beat, and the beat point may be used as a node at which the light color changes. For example, light colors before and after the node may be randomly generated, or determined based on external reference information.

In yet another example, a point at which the speed feature changes is determined as a node at which the dynamic effect changes. For example, dynamic effect before the node is a dot flashing animation, and dynamic effect after the node is a light and shadow gradient animation. Alternatively, when the strong beat occurrence frequency changes from a high speed to a medium speed or a low speed, a gradient point jump amplitude in the light effect changes from a larger value to a smaller value. In some possible implementations, a "gradient point" may be one or more light beads whose colors are different at a previous moment and a current moment, and the "gradient point jump amplitude" may include an amplitude of a color change of the gradient point. When colors before and after the gradient point change are high saturation contrast colors, it is considered that the gradient point jump amplitude is relatively large; when colors before and after the gradient point change are relatively similar colors, it is considered that the gradient point jump amplitude is relatively small. In some possible implementations, a "gradient point" may be one or more light beads disposed between two light beads with a relatively large color contrast, and the "gradient point jump amplitude" may include an amplitude of a color change of the gradient point. When colors of two adjacent light beads are high saturation contrast colors, it is considered that the gradient point jump amplitude is relatively large; when colors of two adjacent light beads are relatively similar colors, it is considered that the gradient point jump amplitude is relatively small.

In still another example, a point at which a tune changes is determined as a node at which a gradient direction changes. If the tune ascends, light effect of a gradient that moves upward or moves toward a user. If the tune descends, light effect of a gradient that moves downward or moves away from the user. If the tune ascends before the node and descends after the node, the light gradient direction changes from upward to downward (or from toward the user to away from the user).

It should be understood that a relationship between the first attribute and the node at which the light effect changes is merely an example for description. In a specific implementation process, the correspondence may alternatively be in another form. For example, a maximum value point on the alto intensity change curve is determined as the node at which the light color changes, the beat point is determined as the point at which the light flashes, a point at which the strong beat occurrence frequency changes is determined as the point at which the gradient direction changes, and the point at which a tune changes is determined as the point at which the dynamic effect changes.

When the light effect displayed by the light display device is determined, only one attribute in the first attribute may be considered, or two or more attributes in the first attribute may be comprehensively considered.

In some possible implementations, the first attribute to be considered in a design of the light effect may be determined with reference to a music style. In an example, if the music style belongs to a classical style, an instrumental music style, or a lyrical style, the node at which the light effect changes may be mainly determined based on the tune feature. In still another example, if the music style is a rock style or a heavy metal style, the node at which the light effect changes may be mainly determined based on the dynamics feature.

In some possible implementations, the first attribute further includes the tempo feature of the audio data, and the light color displayed by the light display device or a frequency at which the light effect changes or both are controlled based on the tempo feature.

According to the method for controlling light display provided in this embodiment of this application, the light effect can be designed based on music features in a plurality of dimensions. This helps improve a degree of cooperation between the light effect and music, improve expressiveness of the light effect in the music, and further improve driving experience of a user.

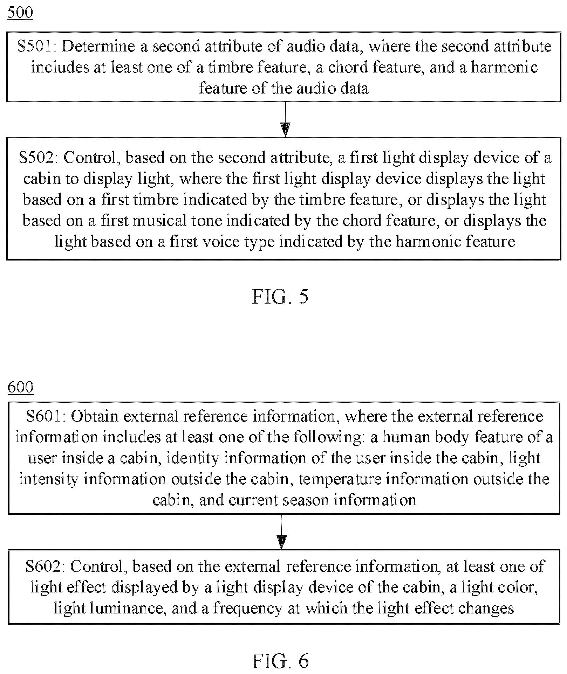

FIG. 5 is a method 500 for controlling light display according to an embodiment of this application. The method 500 may be applied to the vehicle 100 shown in FIG. 1, and the method may be further performed by the system shown in FIG. 3. The method 500 includes the following steps.

S501: Determine a second attribute of audio data, where the second attribute includes at least one of a timbre feature, a chord feature, and a harmonic feature of the audio data.

For example, the method may be applied to a cabin of the vehicle 100 in the foregoing embodiment, or may be applied to a field of light control in a smart home.

For example, a quantity of musical instruments in the audio data may be determined by using a musical instrument identification algorithm based on a recursive graph; and chord identification and/or harmony identification of the audio data may be performed by using an algorithm based on a pitch class profile (pitch class profile, PCP) and an algorithm based on constant Q transform (constant Q transform, CQT), to determine a quantity of musical tones in a chord and/or a quantity of voice types in a harmony. It should be understood that another algorithm may be used to determine the quantity of musical instruments, the quantity of musical tones in the chord, and the quantity of voice types in the harmony. This is not specifically limited in embodiments of this application.

S502: Control, based on the second attribute, a first light display device of the cabin to display light, where the first light display device displays the light based on a first timbre indicated by the timbre feature, or displays the light based on a first musical tone indicated by the chord feature, or displays the light based on a first voice type indicated by the harmonic feature.

For example, the first light display device includes one or more light display devices in the foregoing embodiment.

For example, the light display device totally includes 10 light display devices: a light display device 1 to a light display device 10.

In an example, the timbre feature indicates that the quantity of musical instruments in the audio data is 4, and four light display devices in the light display device 1 to the light display device 10 may be controlled. For example, the light display device 1 to the light display device 4 separately display light effect based on audio of one of the four musical instruments.

In still another example, the chord feature indicates that the quantity of musical tones in the chord in the audio data is 3, and three light display devices in the light display device 1 to the light display device 10 may be controlled. For example, the light display device 5 to the light display device 7 separately display light effect based on one of the three musical tones.

In still another example, the harmonic feature indicates that the quantity of voice types in the harmony in the audio data is 3, and three light display devices in the light display device 1 to the light display device 10 may be controlled. For example, the light display device 8 to the light display device 10 separately display light effect based on one of the three voice types.

In some possible implementations, a light display device that displays the light effect based on a musical instrument and a light display device that displays the light effect based on a musical tone or a voice type may alternatively be a same light display device. This is not specifically limited in this embodiment of this application.

According to the method for controlling light display provided in this embodiment of this application, the light display device for displaying the light effect can be determined based on at least one of the timbre feature, the harmonic feature, and the chord feature in the audio data. This helps improve expressiveness of the light display device, further improves dynamic light effect in a process in which the light effect changes with music, and improves user experience.

The method 500 may be performed before the method 400, performed after the method 400, or performed in parallel with the method 400. This is not specifically limited in this embodiment of this application.

In some possible implementations, the method 500 may be combined with the method 400. For example, a node at which light effect displayed by each of two or more light display devices changes is separately controlled based on the first attribute and the second attribute.

FIG. 6 is a method 600 for controlling light display according to an embodiment of this application. The method 600 may be applied to the vehicle 100 shown in FIG. 1, and the method may be further performed by the system shown in FIG. 3. The method 600 includes the following steps.

S601: Obtain external reference information, where the external reference information includes at least one of the following: a human body feature of a user inside a cabin, identity information of the user inside the cabin, light intensity information outside the cabin, temperature information outside the cabin, and current season information.

For example, the cabin may be the cabin of the vehicle 100 in the foregoing embodiments, or a cabin of another vehicle. This is not specifically limited in this embodiment of this application.

For example, the human body feature may include a human body feature in the foregoing embodiments, and the identity information may include the identity information in the foregoing embodiments.

In an example, the obtaining a human body feature of a user inside a cabin may include: obtaining a face image of the user shot by an image shooting apparatus or a visual sensor (for example, a DMS or a CMS) in the cabin. Further, when the user is a driver, the face image may be processed by using a facial key point detection algorithm and a fatigue detection algorithm, to obtain a fatigue degree of the user; the face image may be processed by using a C3AE facial age identification algorithm, to determine an age of the user; or the face image may be processed by using the facial key point detection algorithm and a mood identification algorithm, to determine a mood status of the user.

In still another example, the obtaining light intensity information outside the cabin includes: obtaining light intensity information collected by a photosensitive sensor; the obtaining temperature information outside the cabin includes: obtaining temperature information collected by a temperature sensor; the obtaining current season information includes: obtaining current season information from a cloud server.

S602: Control, based on the external reference information, at least one of light effect displayed by a light display device of the cabin, a light color, light luminance, and a frequency at which the light effect changes.

For example, for a method for determining, based on the external reference information, the light effect displayed by the light display device of the cabin, the light color, the light luminance, and the frequency at which the light effect changes, refer to Table 2 and descriptions of corresponding parts.

For example, the light effect, the light color, and the light luminance may include: light effect, a light color, and light luminance before a node at which the light effect changes, and/or light effect, a light color, and light luminance after the node at which the light effect changes.

In some possible implementations, the determining, based on the identity information of the user, the light effect displayed by the light display device, the light color, the light luminance, and the frequency at which the light effect changes may further include: determining a light effect style preference of the user based on the identity information.

In some possible implementations, identity information of one or more users is stored in the vehicle. If identity information of the user inside the cabin matches the identity information of the one or more users, the light effect style may be determined based on the identity information of the user inside the cabin.

According to the method for controlling light display provided in this embodiment of this application, the light effect can be determined with reference to the user preference, environment information outside the cabin, and the like. This can meet requirements of users of different ages and/or different preferences, and help improve user comfort.

The method 600 may be performed before the method 400 and/or the method 500, performed after the method 400 and/or the method 500, or performed in parallel with the method 400 and/or the method 500. This is not specifically limited in this embodiment of this application.

In some possible implementations, the method 600 may be combined with the method 400. For example, a frequency of the node at which the light effect displayed by the light display device changes, and/or light colors before and after the node are controlled based on the external reference information and the first attribute. The frequency of the node at which the light effect changes may include the frequency at which the light effect changes.

In some possible implementations, before the method 400, the method 500, and the method 600 are performed, the audio data is obtained from a music player of the vehicle, and segmentation is performed on the audio data to obtain one or more pieces of segmented audio data. For example, the audio data may be segmented based on a self-similarity matrix (self-similarity matrix, SSM) algorithm. For example, for popular music, the audio data may be segmented based on an intro, a chorus, and a verse; for classical music, the audio data may be segmented based on an exposition (exposition) section, a development (development) section, and a recapitulation (recapitulation) section. Alternatively, the audio data may be segmented according to a clustering algorithm, and repeated audio is classified into one type. Alternatively, the audio data may be segmented by using another method. This is not specifically limited in this embodiment of this application. It should be understood that segmentation on the audio data helps reduce a delay during real-time generation and display of the light effect.

In some possible implementations, after the light effect is determined by using at least one of the method 400, the method 500, and the method 600, the light effect may be stored based on the identity information of the user or based on the audio data, so that the user can directly control the light display device to display the light effect when playing the audio data next time.

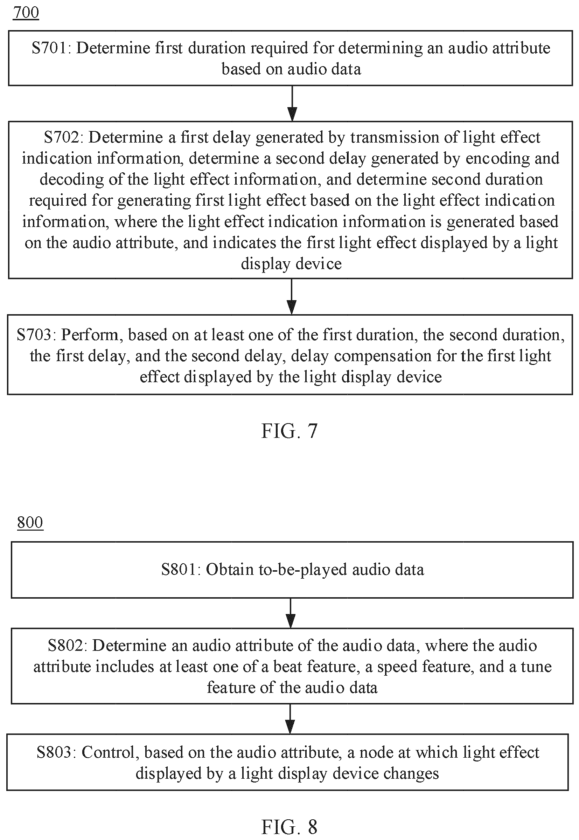

FIG. 7 is a method 700 for controlling light display according to an embodiment of this application. The method 700 may be applied to the vehicle 100 shown in FIG. 1, and the method may be further performed by the system shown in FIG. 3. The method 700 includes the following steps.

S701: Determine first duration required for determining an audio attribute based on audio data.

For example, the audio data may include the audio data in the foregoing embodiments, and the audio attribute may include the first attribute and/or the second attribute in the foregoing embodiment.

For example, the first duration may include duration required when the audio data is identified by using an audio identification algorithm to obtain the audio attribute. In some possible implementations, more complex audio data indicates longer first duration. For example, more musical instruments, harmonies, and chords included in the audio data indicate more complex audio data and longer first duration.

S702: Determine a first delay generated by transmission of light effect indication information, determine a second delay generated by encoding and decoding of the light effect indication information, and determine second duration required for generating first light effect based on the light effect indication information, where the light effect indication information is generated based on the audio attribute, and indicates the first light effect displayed by a light display device.

In some possible implementations, the first delay is determined based on network bandwidth for transmitting the light effect indication information in the vehicle and a data frame length of the light effect indication information. A smaller network bandwidth and a longer data frame length indicate a longer first delay. For example, the second delay is determined based on the data frame length of the light effect indication information. A longer data frame length indicates a longer second delay.

S703: Perform, based on at least one of the first duration, the second duration, the first delay, and the second delay, delay compensation for the first light effect displayed by the light display device.

In some possible implementations, due to existence of the first duration, the first delay, and the second delay, the light effect displayed by the light display device lags behind audio output by an audio device. As a result, a node at which the light effect actually changes is inconsistent with a node determined based on the first attribute. Delay compensation is performed, based on the first duration, the first delay, and the second delay, for the first light effect displayed by the light display device, so that the node at which the light effect actually changes coincides with the node determined based on the first attribute, or a time difference between the node at which the light effect actually changes and the node determined based on the first attribute is less than or equal to a first threshold. For example, the first threshold may be 16 milliseconds, 15 milliseconds, or another value higher than a human eye identification frequency. This is not specifically limited in this embodiment of this application.

In some possible implementations, light effect compensation may be further performed for the light effect displayed by the light display device with reference to an audio sampling rate and a light refresh rate. For example, if the audio sampling rate is 44100 hertz (hertz, Hz), playing time of each frame of audio is about 23.2 milliseconds (or it may be understood as upgrading one frame of audio every 23.2 milliseconds). It is assumed that the light refresh rate is 20 Hz, that is, light is refreshed every 50 milliseconds. Light effect compensation may be added in a position in which a delay exists between an audio update and light refreshing, to smooth the light effect. For example, ripple (gradual white) light effect is added, to perform buffer compensation.

In some possible implementations, the light display device that displays the light based on the audio may include two or more links. Each link includes at least one light display device, and a light refresh rate in each of the two or more links may be different from another, and in this case, delay compensation may be performed for each link.

According to the method for controlling light display provided in this embodiment of this application, the node at which the light effect actually changes can be basically aligned with the node determined based on the first attribute of the audio data, helping improve user experience during use of the light display device.

FIG. 8 is a method 800 for controlling light display according to an embodiment of this application. The method 800 may be applied to the vehicle 100 shown in FIG. 1, and the method may be further performed by the system shown in FIG. 3. The method 800 includes the following steps.

S801: Obtain to-be-played audio data.

For example, the audio data may be the audio data in the foregoing embodiments, or may be other to-be-played audio data.

S802: Determine an audio attribute of the audio data, where the audio attribute includes at least one of a beat feature, a speed feature, and a tune feature of the audio data.

For example, the audio attribute may be the audio attribute in the method 700; may include the first attribute in the foregoing embodiments, may further include the second attribute in the foregoing embodiments, or may further include another audio-related attribute.

For example, for a method for determining the audio attribute, refer to the descriptions in the foregoing embodiments. Details are not described herein again.

S803: Control, based on the audio attribute, a node at which light effect displayed by a light display device changes.

For example, for a method procedure of controlling, based on the audio attribute, the node at which the light effect displayed by the light display device changes, refer to the description in the foregoing embodiments. Details are not described herein again.

In some possible implementations, the controlling a node at which light effect displayed by a light display device changes includes at least one of the following: controlling a moment at which the light effect displayed by the light display device changes, and/or a specific form of light effect before and after the light effect changes.

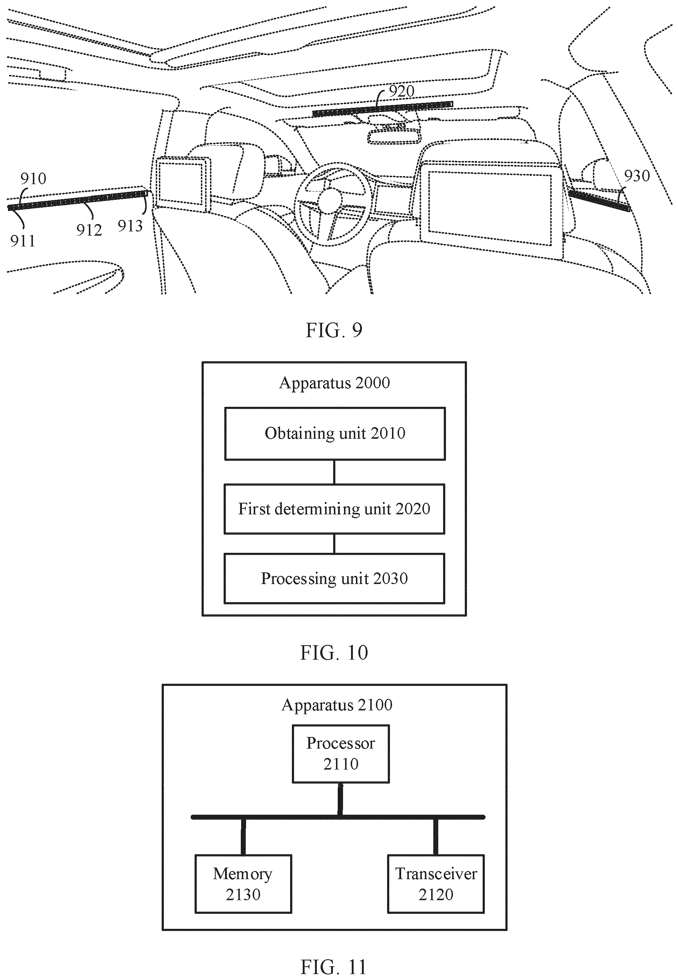

For example, the light effect includes at least one of the following: a light color, light luminance, and dynamic effect formed by light. When the light display device includes a light strip, the dynamic effect formed by the light includes but is not limited to: a direction in which light changes, a speed at which the light changes, a flow length of the light, and a color change type (for example, a change based on a color palette, or a black and white change) in the light strip. In addition, the light effect may further include: dynamic effect formed by light in a light strip dimension, and/or dynamic effect formed by the light in a time dimension. The following provides specific descriptions with reference to FIG. 9.

As shown in FIG. 9, the light display device includes a light strip 910, a light strip 920, and a light strip 930, where each light strip includes a plurality of light beads. The light strip 910 is used as an example to describe the dynamic effect formed by the light in the light strip dimension. A direction in which the light changes in the light strip may include: a change direction from a light bead 911 to a light bead 913, or a change direction from the light bead 913 to the light bead 911. The light change may include but is not limited to: sequential illumination of light beads, sequential extinguishing of the light beads, and a light bead color gradient. A speed at which the light changes may be reflected in duration. For example, shorter duration required for sequential illumination from the light bead 911 to the light bead 913 indicates a higher speed at which the light changes. Flow of the light may be presented through sequential illumination and/or sequential extinguishing of the light beads. A flow length of the light may be reflected by a quantity of light beads in the light strip for light display. For example, the light bead 911 to the light bead 913 may all be controlled to display light, or the light bead 911 and the light bead 912 may be controlled to display light. A flow length of the lights in the former case is longer than that in the latter case. In some implementations, the dynamic effect formed by the light in the time dimension may be reflected by duration in which the light strip 910 to the light strip 930 display light. In an example, at least two of the light strip 910, the light strip 920, and the light strip 930 may be controlled to simultaneously display light. In another example, the light strip 910, the light strip 920, and the light strip 930 may be controlled to sequentially display light. For example, after the light strip 910 displays light, the light strip 920 displays light, and after the light strip 920 displays light, the light strip 930 displays light.

Optionally, the audio attribute includes at least one of a timbre feature, a chord feature, and a harmonic feature of the audio data; and a change in the light effect displayed by the light display device is controlled based on the at least one of the timbre feature, the chord feature, and the harmonic feature. For example, a node at which light effect displayed by a first light display device changes is controlled based on the first timbre feature; and/or a node at which light effect displayed by a second light display device changes is controlled based on the second timbre feature. The light display device includes the first light display device and the second light display device. A node at which light effect displayed by a third light display device changes is controlled based on a first harmonic feature; and/or a node at which light effect displayed by a fourth light display device changes is controlled based on a second harmonic feature. The light display device includes the third light display device and the fourth light display device. A node at which light effect displayed by a fifth light display device changes is controlled based on a first chord feature; and/or a node at which light effect displayed by a sixth light display device changes is controlled based on a second chord feature. The light display device includes the fifth light display device and the sixth light display device.

For example, the first timbre feature indicates related information of a first timbre in the audio data, and the second timbre feature indicates related information of a second timbre in the audio data.

For example, the first harmonic feature indicates related information of a first voice type in the audio data, and the second harmonic feature indicates related information of a second voice type in the audio data.

For example, the first chord feature indicates related information of a first musical tone in the audio data, and the second chord feature indicates related information of a second musical tone in the audio data.

For a specific method procedure of controlling, based on at least one of the timbre feature, the chord feature, and the harmonic feature, the change in the light effect displayed by the light display device, refer to the description in the foregoing embodiments, and details are not described herein again.

Optionally, the node at which the light effect displayed by the light display device changes is controlled based on the audio attribute, a human body feature or identity information of a first user inside the cabin. For example, light colors before and after the node, and/or a frequency of the node or both are controlled.

For example, the human body feature or the identity information of the first user inside the cabin may include one or more of the external reference information in the foregoing embodiments. For a specific method procedure of controlling, based on the audio attribute, the human body feature or the identity information of the first user inside the cabin, the node at which the light effect displayed by the light display device changes, refer to the description in the foregoing embodiments. Details are not described herein again.

Optionally, the light colors before and after the node is controlled based on the audio attribute, the temperature information outside the cabin and/or the current season information.

For example, the temperature information outside the cabin and/or the current season information may include one or more of the external reference information in the foregoing embodiments. For example, the temperature information may include an external temperature. For a specific method procedure of controlling the light colors before and after the node based on the audio attribute, the temperature information outside the cabin, and/or the current season information, refer to the description in the foregoing embodiments, and details are not described herein again.

Optionally, light luminance before and after the node is controlled based on the audio attribute and the light intensity information outside the cabin.

For example, the light intensity information outside the cabin may include one or more of the external reference information in the foregoing embodiments, for example, ambient light intensity. For a specific method procedure of controlling the light luminance before and after the node based on the audio attribute and the light intensity information, refer to the description in the foregoing embodiments, and details are not described herein again.

According to the method for controlling light display provided in this embodiment of this application, the light effect can be controlled based on music features in one or more dimensions. This helps improve a degree of cooperation between the light effect and music, improve expressiveness of the light effect in the music, and further improve driving experience of a user.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

The foregoing describes in detail the methods provided in embodiments of this application with reference to FIG. 4 to FIG. 9. The following describes in detail apparatuses provided in embodiments of this application with reference to FIG. 10 and FIG. 11. It should be understood that descriptions of apparatus embodiments correspond to the descriptions of the method embodiments. Therefore, for content that is not described in detail, refer to the method embodiments. For brevity, details are not described herein again.

FIG. 10 is a block diagram of an apparatus 2000 for controlling light display according to an embodiment of this application. The apparatus 2000 includes an obtaining unit 2010, a first determining unit 2020, and a processing unit 2030.

The apparatus 2000 may include units configured to perform the methods in FIG. 4 to FIG. 8. In addition, the units in the apparatus 2000 and the foregoing other operations and/or functions are separately used to implement corresponding procedures of the method embodiments in FIG. 4 and FIG. 8.

When the apparatus 2000 is configured to perform the method 800 in FIG. 8, the obtaining unit 2010 may be configured to perform S801 in the method 800, the first determining unit 2020 may be configured to perform S802 in the method 800, and the processing unit 2030 may be configured to perform S803 in the method 800.

Specifically, the apparatus 2000 includes: the obtaining unit 2010, configured to obtain to-be-played audio data; the first determining unit 2020, configured to determine an audio attribute of the audio data, where the audio attribute includes at least one of a beat feature, a speed feature, and a tune feature of the audio data; and the processing unit 2030, configured to control, based on the audio attribute, a node at which light effect displayed by a light display device changes.

Optionally, the audio attribute further includes a tempo feature of the audio data, and the processing unit 2030 is configured to control one or more of light colors before and after the node and a frequency of the node based on the tempo feature, where the frequency of the node indicates a speed at which the light effect changes.

Optionally, the apparatus further includes a second determining unit, configured to determine delay information, where the delay information includes at least one of the following: first duration required for determining the audio attribute based on the audio data, a first delay generated by transmission of light effect indication information, a second delay generated by encoding and decoding of the light effect indication information, and second duration required for generating first light effect based on the light effect indication information. The light effect indication information is generated based on the audio attribute, and indicates the first light effect displayed by the light display device. The processing unit 2030 is configured to control, based on the audio attribute and the delay information, the node at which the light effect displayed by the light display device changes, where light effect before and after the node includes the first light effect.

In some possible implementations, the first determining unit 2020 and the second determining unit are a same determining unit.

Optionally, the audio attribute further includes a timbre feature, the timbre feature includes a first timbre feature and a second timbre feature, and the processing unit 2030 includes a first processing unit and a second processing unit, where the first processing unit is configured to control, based on the first timbre feature, a node at which light effect displayed by a first light display device changes; and/or the second processing unit is configured to control, based on the second timbre feature, a node at which light effect displayed by a second light display device changes, where the light display device includes the first light display device and the second light display device.

In some possible implementations, the first processing unit and the second processing unit are a same processing unit.

Optionally, the timbre feature includes a human voice timbre feature and/or a musical instrument timbre feature.

Optionally, the audio attribute further includes a harmonic feature, the harmonic feature includes a first harmonic feature and a second harmonic feature, and the processing unit 2030 includes a third processing unit and a fourth processing unit, where the third processing unit is configured to control, based on the first harmonic feature, a node at which light effect displayed by a third light display device changes; and/or the fourth processing unit is configured to control, based on the second harmonic feature, a node at which light effect displayed by a fourth light display device changes, where the light display device includes the third light display device and the fourth light display device.

In some possible implementations, the third processing unit and the fourth processing unit are a same processing unit.

Optionally, the audio attribute further includes a chord feature, and the chord feature includes a first chord feature and a second chord feature, and the processing unit 2030 includes a fifth processing unit and a sixth processing unit, where the fifth processing unit is configured to control, based on the first chord feature, a node at which light effect displayed by a fifth light display device changes; and/or the sixth processing unit is configured to control, based on the second chord feature, a node at which light effect displayed by a sixth light display device changes, where the light display device includes the fifth light display device and the sixth light display device.

In some possible implementations, the fifth processing unit and the sixth processing unit are a same processing unit.

Optionally, the obtaining unit 2010 is further configured to obtain a human body feature or identity information of a first user inside a cabin, and the processing unit 2030 is configured to control, based on the audio attribute and the human body feature or the identity information, the node at which the light effect displayed by the light display device changes.

Optionally, the processing unit 2030 is configured to: when a vehicle to which the cabin belongs is in a traveling state, the first user is in a driver position of the cabin, and the human body feature indicates that the first user is in a fatigue state, increase the frequency of the node, and/or control light to display warning colors before and after the node.

Optionally, the obtaining unit 2010 is further configured to obtain environment information outside the cabin, where the environment information includes one or more of temperature information, current season information, and light intensity information, and the processing unit 2030 is configured to control, based on the audio attribute and the environment information, one or more of the light colors before and after the node, the frequency of the node, and light luminance before and after the node.

Optionally, the obtaining unit 2010 is further configured to obtain temperature information outside the cabin and/or current seasonal information; and the processing unit 2030 is configured to control the light colors before and after the node based on the audio attribute, the temperature information outside the cabin and/or the current season information.

Optionally, the obtaining unit 2010 is further configured to obtain light intensity information outside the cabin, and the processing unit 2030 is configured to control light luminance before and after the node based on the audio attribute and the light intensity information outside the cabin.

Optionally, the node at which the light effect changes is associated with at least one of the following in the audio attribute: a beat point indicated by the beat feature, a point at which a strong beat occurrence frequency indicated by the speed feature changes, and a point at which a tune indicated by the tune feature changes.

It should be understood that division of units in the apparatus is merely logical function division. During actual implementation, all or some of the units may be integrated into one physical entity or may be physically separated. In addition, the unit in the apparatus may be implemented in a form in which a processor invokes software. For example, the apparatus includes the processor, the processor is connected to a memory, the memory stores instructions, and the processor invokes the instructions stored in the memory, to implement any one of the foregoing methods or functions of the units in the apparatus. The processor is, for example, a general-purpose processor, like a CPU or a microprocessor, and the memory is a memory inside the apparatus or a memory outside the apparatus. Alternatively, the unit in the apparatus may be implemented in a form of a hardware circuit, and functions of some or all units may be implemented by designing the hardware circuit. The hardware circuit may be understood as one or more processors. For example, in an implementation, the hardware circuit is an ASIC, and functions of some or all units are implemented by designing a logical relationship between elements in the circuit. For another example, in another implementation, the hardware circuit may be implemented by using a PLD. Using an FPGA as an example, the FPGA may include a large quantity of logic gate circuits, and a connection relationship between the logic gate circuits is configured by using a configuration file, to implement functions of some or all of the units. All the units of the apparatus may be implemented in the form in which the processor invokes the software, or may be implemented in the form of the hardware circuit, or some of the units are implemented in the form in which the processor invokes the software, and other units are implemented in the form of the hardware circuit.

In this embodiment of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function based on a logical relationship of a hardware circuit, and the logical relationship of the hardware circuit is fixed or reconfigurable. For example, the processor is a hardware circuit implemented by an ASIC or a PLD, like an FPGA. In a reconfigurable hardware circuit, a process in which the processor loads a configuration document to implement hardware circuit configuration may be understood as a process in which the processor loads instructions to implement functions of some or all of the foregoing units. In addition, the circuit may alternatively be a hardware circuit designed for artificial intelligence, and may be understood as an ASIC, for example, an NPU, a TPU, or a DPU.

It can be learned that the units in the foregoing apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units of the apparatus. The at least one processor may be different in type. For example, the at least one processor includes a CPU and an FPGA, a CPU and an artificial intelligence processor, or a CPU and a GPU.

In a specific implementation process, the operations performed by the obtaining unit 2010, the first determining unit 2020, and the processing unit 2030 may be performed by a same processor, or different processors, for example, may be separately performed by a plurality of processors. The operations performed by the first processing unit, the second processing unit, the third processing unit, the fourth processing unit, the fifth processing unit, and the sixth processing unit may be performed by a same processor, or may be performed by different processors, for example, may be separately performed by a plurality of processors. In an example, the one or more processors may be connected to one or more sensors in the sensing system 120 in FIG. 1, to obtain and process information about a position of a user from the one or more sensors. In another example, the one or more processors may be further connected to one or more light display devices in the display apparatus 130, to control effect of each light in the one or more light display devices. For example, in a specific implementation process, the one or more processors may be a processor disposed in an in-vehicle infotainment, or a processor disposed in another in-vehicle terminal. For example, in a specific implementation process, the apparatus 2000 may be a chip disposed in the in-vehicle infotainment or another in-vehicle terminal. For example, in a specific implementation process, the apparatus 2000 may be the computing platform 150 shown in FIG. 1 disposed in the vehicle.

An embodiment of this application further provides an apparatus. The apparatus includes a processing unit and a storage unit. The storage unit is configured to store instructions, and the processing unit executes the instructions stored in the storage unit, so that the apparatus performs the methods or steps performed in the foregoing embodiments.

Optionally, in a specific implementation process, the processing unit includes the processors 151 to 15n shown in FIG. 1. The obtaining unit may be a specific sensor in the sensing system 120 shown in FIG. 1, or the processors 151 to 15n shown in FIG. 1.

FIG. 11 is a block diagram of an apparatus for controlling light display according to an embodiment of this application. The apparatus 2100 for controlling light display shown in FIG. 11 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130. The transceiver 2120 receives/sends some parameters. Optionally, the memory 2130 may be coupled to the processor 2110 by using an interface, or may be integrated with the processor 2110.

The transceiver 2120 may include but is not limited to, a transceiver apparatus like an input/output interface (input/output interface), to implement communication between the apparatus 2100 and another device or a communication network.

The processor 2110 may be a general-purpose CPU, a microprocessor, an ASIC, a GPU, or one or more integrated circuits, and is configured to execute a related program, to implement the methods for controlling light display in the method embodiments of this application. The processor 2110 may alternatively be an integrated circuit chip and has a signal processing capability. In a specific implementation process, steps of the methods for controlling light display in this application may be completed by using an integrated logic circuit of hardware in the processor 2110 or instructions in a form of software. The processor 2110 may alternatively be a general-purpose processor, a DSP, an ASIC, an FPGA or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, like a random access memory, a flash memory, a read-only memory, a programmable read-only memory, an electrically erasable programmable memory, or a register. The storage medium is located in the memory 2130. The processor 2110 reads information in the memory 2130, and performs, in combination with hardware of the processor 2110, the methods for controlling light display in the method embodiments of this application.

The memory 2130 may be a read only memory (read only memory, ROM), a static storage device, a dynamic storage device, or a random access memory (random access memory, RAM).

The transceiver 2120 uses a transceiver apparatus, for example, but not limited to a transceiver, to implement communication between the apparatus 2100 and another device or a communications network. For example, information about a position of a user may be obtained by using the transceiver 2120.

An embodiment of this application further provides a mobile carrier. The mobile carrier may include the apparatus 2000 or the apparatus 2100.

For example, the mobile carrier may be the vehicle in the foregoing embodiments.

An embodiment of this application further provides a computer program product. The computer program product includes computer program code. When the computer program code is run on a computer, the computer is enabled to perform the methods in FIG. 4 to FIG. 8.

An embodiment of this application further provides a computer-readable storage medium. The computer-readable storage medium stores program code or instructions. When the computer program code or the instructions are executed by a processor of a computer, the processor is enabled to implement the methods in FIG. 4 to FIG. 8.

An embodiment of this application further provides a chip, including at least one processor and a memory. The at least one processor is coupled to the memory, and is configured to read and execute instructions in the memory to perform any methods in FIG. 4 to FIG. 8.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, expressions such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, all or some of the technical solutions of this application may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for controlling light display, comprising:
obtaining to-be-played audio data;
determining an audio attribute of the audio data, wherein the audio attribute comprises at least one of a beat feature, a speed feature, and a tune feature of the audio data; and
controlling, based on the audio attribute, a node at which light effect displayed by a light display device changes.

2. The method according to claim 1, wherein the audio attribute further comprises a tempo feature of the audio data, and the controlling a node at which light effect displayed by a light display device changes comprises:
controlling one or more of light colors before and after the node and a frequency of the node based on the tempo feature, wherein the frequency of the node indicates a speed at which the light effect changes.

3. The method according to claim 1 or 2, wherein the method further comprises:
determining delay information, wherein the delay information comprises at least one of the following:
first duration required for determining the audio attribute based on the audio data,
a first delay generated by transmission of light effect indication information,
a second delay generated by encoding and decoding of the light effect indication information, and
second duration required for generating first light effect based on the light effect indication information, wherein
the light effect indication information is generated based on the audio attribute, and indicates the first light effect displayed by the light display device; and
the controlling a node at which light effect displayed by a light display device changes comprises:
controlling, based on the audio attribute and the delay information, the node at which the light effect displayed by the light display device changes, wherein light effect before and after the node comprises the first light effect.

4. The method according to any one of claims 1 to 3, wherein the audio attribute further comprises a timbre feature, the timbre feature comprises a first timbre feature and a second timbre feature, and the controlling a node at which light effect displayed by a light display device changes comprises:
controlling, based on the first timbre feature, a node at which light effect displayed by a first light display device changes; and/or
controlling, based on the second timbre feature, a node at which light effect displayed by a second light display device changes, wherein
the light display device comprises the first light display device and the second light display device.

5. The method according to claim 4, wherein the timbre feature comprises a human voice timbre feature and/or a musical instrument timbre feature.

6. The method according to any one of claims 1 to 5, wherein the audio attribute further comprises a harmonic feature, the harmonic feature comprises a first harmonic feature and a second harmonic feature, and the controlling a node at which light effect displayed by a light display device changes comprises:
controlling, based on the first harmonic feature, a node at which light effect displayed by a third light display device changes; and/or
controlling, based on the second harmonic feature, a node at which light effect displayed by a fourth light display device changes, wherein
the light display device comprises the third light display device and the fourth light display device.

7. The method according to any one of claims 1 to 6, wherein the audio attribute further comprises a chord feature, the chord feature comprises a first chord feature and a second chord feature, and the controlling a node at which light effect displayed by a light display device changes comprises:
controlling, based on the first chord feature, a node at which light effect displayed by a fifth light display device changes; and/or
controlling, based on the second chord feature, a node at which light effect displayed by a sixth light display device changes, wherein
the light display device comprises the fifth light display device and the sixth light display device.

8. The method according to any one of claims 1 to 7, wherein the method is applied to a cabin, and the method further comprises:
obtaining a human body feature or identity information of a first user inside the cabin; and
the controlling a node at which light effect displayed by a light display device changes comprises:
controlling, based on the audio attribute and the human body feature or the identity information, the node at which the light effect displayed by the light display device changes.

9. The method according to claim 8, wherein the controlling the node at which the light effect displayed by the light display device changes comprises:
when a vehicle to which the cabin belongs is in a traveling state, the first user is in a driver position of the cabin, and the human body feature indicates that the first user is in a fatigue state, increasing the frequency of the node, and/or controlling light to display warning colors before and after the node.

10. The method according to any one of claims 1 to 9, wherein the method further comprises:
obtaining environment information outside the cabin, wherein the environment information comprises one or more of temperature information, current season information, and light intensity information; and
the controlling a node at which light effect displayed by a light display device changes comprises:
controlling, based on the audio attribute and the environment information, one or more of the light colors before and after the node, the frequency of the node, and light luminance before and after the node.

11. The method according to any one of claims 1 to 10, wherein the node at which the light effect changes is associated with at least one of the following in the audio attribute:
a beat point indicated by the beat feature, a point at which a strong beat occurrence frequency indicated by the speed feature changes, and a point at which a tune indicated by the tune feature changes.

12. An apparatus for controlling light display, comprising:
an obtaining unit, configured to obtain to-be-played audio data;
a first determining unit, configured to determine an audio attribute of the audio data, wherein the audio attribute comprises at least one of a beat feature, a speed feature, and a tune feature of the audio data; and
a processing unit, configured to control, based on the audio attribute, a node at which light effect displayed by a light display device changes.

13. The apparatus according to claim 12, wherein the audio attribute further comprises a tempo feature of the audio data, and the processing unit is configured to:
control one or more of light colors before and after the node and a frequency of the node based on the tempo feature, wherein the frequency of the node indicates a speed at which the light effect changes.

14. The apparatus according to claim 12 or 13, wherein the apparatus further comprises a second determining unit, configured to:
determine delay information, wherein the delay information comprises at least one of the following:
first duration required for determining the audio attribute based on the audio data,
a first delay generated by transmission of light effect indication information,
a second delay generated by encoding and decoding of the light effect indication information, and
second duration required for generating first light effect based on the light effect indication information, wherein
the light effect indication information is generated based on the audio attribute, and indicates the first light effect displayed by the light display device; and
the processing unit is configured to control, based on the audio attribute and the delay information, the node at which the light effect displayed by the light display device changes, wherein light effect before and after the node comprises the first light effect.

15. The apparatus according to any one of claims 12 to 14, wherein the audio attribute further comprises a timbre feature, the timbre feature comprises a first timbre feature and a second timbre feature, and the processing unit comprises a first processing unit and a second processing unit, wherein
the first processing unit is configured to control, based on the first timbre feature, a node at which light effect displayed by a first light display device changes; and/or
the second processing unit is configured to control, based on the second timbre feature, a node at which light effect displayed by a second light display device changes, wherein
the light display device comprises the first light display device and the second light display device.

16. The apparatus according to claim 15, wherein the timbre feature comprises a human voice timbre feature and/or a musical instrument timbre feature.

17. The apparatus according to any one of claims 12 to 16, wherein the audio attribute further comprises a harmonic feature, the harmonic feature comprises a first harmonic feature and a second harmonic feature, and the processing unit comprises a third processing unit and a fourth processing unit, wherein
the third processing unit is configured to control, based on the first harmonic feature, a node at which light effect displayed by a third light display device changes; and/or
the fourth processing unit is configured to control, based on the second harmonic feature, a node at which light effect displayed by a fourth light display device changes, wherein
the light display device comprises the third light display device and the fourth light display device.

18. The apparatus according to any one of claims 12 to 17, wherein the audio attribute further comprises a chord feature, the chord feature comprises a first chord feature and a second chord feature, and the processing unit comprises a fifth processing unit and a sixth processing unit, wherein
the fifth processing unit is configured to control, based on the first chord feature, a node at which light effect displayed by a fifth light display device changes; and/or
the sixth processing unit is configured to control, based on the second chord feature, a node at which light effect displayed by a sixth light display device changes, wherein
the light display device comprises the fifth light display device and the sixth light display device.

19. The apparatus according to any one of claims 12 to 18, wherein the obtaining unit is further configured to obtain a human body feature or identity information of a first user inside a cabin; and
the processing unit is configured to control, based on the audio attribute and the human body feature or the identity information, the node at which the light effect displayed by the light display device changes.

20. The apparatus according to claim 19, wherein the processing unit is configured to:
when a vehicle to which the cabin belongs is in a traveling state, the first user is in a driver position of the cabin, and the human body feature indicates that the first user is in a fatigue state, increase the frequency of the node, and/or control light to display warning colors before and after the node.

21. The apparatus according to any one of claims 12 to 20, wherein the obtaining unit is further configured to obtain environment information outside the cabin, wherein the environment information comprises one or more of temperature information, current season information, and light intensity information;
the processing unit is configured to control, based on the audio attribute and the environment information, one or more of the light colors before and after the node, the frequency of the node, and light luminance before and after the node.

22. The apparatus according to any one of claims 12 to 21, wherein the node at which the light effect changes is associated with at least one of the following in the audio attribute:
a beat point indicated by the beat feature, a point at which a strong beat occurrence frequency indicated by the speed feature changes, and a point at which a tune indicated by the tune feature changes.

23. An apparatus for controlling light display, comprising:
a memory, configured to store a computer program; and
a processor, configured to execute the computer program stored in the memory, so that the apparatus performs the method according to any one of claims 1 to 11.

24. A mobile carrier, comprising the apparatus according to any one of claims 12 to 23.

25. The mobile carrier according to claim 24, wherein the mobile carrier is a vehicle.

26. A computer-readable storage medium, wherein the computer-readable storage medium stores a computer program, and when the computer program is executed by a computer, the method according to any one of claims 1 to 11 is performed.

27. A chip, wherein the chip comprises a processor and a data interface, and the processor reads, through the data interface, instructions stored in a memory, to perform the method according to any one of claims 1 to 11.
